Europäisches Patentamt

European Patent Office

Office européen des brevets

(19)

(11) EP 1 376 999 A1

(12) **EUROPEAN PATENT APPLICATION**

(43) Date of publication:
**02.01.2004 Bulletin 2004/01**

(51) Int Cl.⁷: $H04M\ 3/493$, $G10L\ 15/22$

(21) Application number: **02254354.0**

(22) Date of filing: **21.06.2002**

(84) Designated Contracting States:
**AT BE CH CY DE DK ES FI FR GB GR IE IT LI LU MC NL PT SE TR**
Designated Extension States:
**AL LT LV MK RO SI**

(72) Inventor: **The designation of the inventor has not yet been filed**

(74) Representative: **Lloyd, Barry George William et al BT Group Legal Services, Intellectual Property Department, 8th Floor, Holborn Centre, 120 Holborn London EC1N 2TE (GB)**

(71) Applicant: **BRITISH TELECOMMUNICATIONS public limited company London EC1A 7AJ (GB)**

(54) **Spoken alpha-numeric sequence entry system with repair mode**

(57)     A dialogue system for processing the entry of a spoken sequence of alpha-numeric characters like digits of a telephone number that allow self-repair of recognition errors. The system uses a recognition buffer to store the decoded characters. A recognition feedback is given to the user, by outputting characters in small groups. The user can respond to the feedback by giving a correction indication. To detect repair (repetition, substitution, insertion of characters), the similarity of newly inputted characters is compared with the buffer. The system is enhanced by a dialogue state dependent timeout before which entries must take place.

EP 1 376 999 A1

## Description

### Chapter I: Introduction

The present application is concerned with methos and apparatus for use on performing speech dialogues, particularly, though not exclusively for such dialogeues performed over the telephone.

### Prior Art

In "How to Build a Speech Recognition Application", B. Balentine, and D. P Morgan, 2002, a system is discussed which, having recognised a string of digits reads them back to the user for confirmation. If a particular digit is reported by the recogniser as having poor reliability, the system interrupts its read-back at that point so that the confirmation can be received from the user before the system reads the digits which follow.

US patent 6,078,887 (Gamm et al/Philips) describes a speech recognition system for numeric characters where a recogniser receives a string of spoken digits, and reads them back to the speaker for confirmation. If negative confirmation is received , the apparatus asks for a correction. If the correcting string has a length equal to or greater that the original input, is is used unconditionally to replace and (if longer) continue the original one. If on the other hand it is shorter, it is compared at different shifts withe the original input to obtain a count of the number of matching digits. Using the shift that gives the largest number of matches, the new string is used to overwrite the the old string.

Various aspects of the ijnvention are set out in the claims

Some embodiments of the invention will now be described, by way of example with reference to the accompanying drawings, in which:

Figure I is a block diagram of an interactive speech dialogue system;

Figure II is a flowchart showing the operation of a voice dialogue;

Figure III is a diagram illustrating a simple telephone number buffer

Figure IV is a flowchart illustrating a chunked confirmation sub-dialogue which may be used with the dialogue of Figure II;

Figure V is a diagram illustrating an extended telephone number buffer

Figure VI is a flowchart showing one way of dividing a string into chunks;

Figure VII is a diagram illustrating alignment of an input against the extended buffer;

Figure VIII is a diagram illustrating block boundaries and chunks; and

Figure IX is a flowchart showing a dialogue according to a further embodiment of the invention.

### Chapter II: Infrastructure

The system now to be described offers a dialogue design for a telephone number transfer dialogue, suitable, for example, for use in a telephone call handling system. The intention of the design is to enable givers to transfer numbers in chunks rather than as a whole number and allow auto-correction of problems as they occur. When discussing the caller's role in the conversation the term 'giver' will be used. When discussing the automated dialogue system role in the conversation the term 'receiver' will be used.

In Figure I, an audio input 1 (for example connected to a telephone line) is connected to a speech recogniser 2 which supplies a text representation of a recognised utterance to a parser 3. The recogniser operates with a variable timeout for recognition of the end of an utterance. The parser 3 receives the recognition results produced by the recogniser 2, and regularises them, as will be described later, for entry into an input block buffer 4. Also, on the basis of the recognition results so far, and an external input indicating a current "dialogue state", the parser 3 controls the recogniser timeout period, that is, a duration of silence following which an utterance is considered complete. Once the complete utterance has been recognised, it is transferred to the buffer 4.

The actual dialogue is controlled by a dialogue processor 5, consisting of a conventional stored-program controlled processor, memory, and a program for controlling it, stored in the memory. The operation of this program will be described in detail below. In this example the function of the processor is to elicit from a giver a complete telephone number. It can interrogate the buffer 4 to obtain a coded representation of a recognised utterance, provide spoken feedback to the giver via a speech synthesiser 6 and audio output 7, and aims to deliver a complete telephone number to an output buffer 8 and output 9. It also signals dialogue states to the parser 3.

Figure I also explicitly shows (for the purposes of illustration) a buffer 10 used for the manipulation of intermediate results: in practice this would simply be an assigned area of the processor's memory.

The description shows the use of grounding dialogue to input telephone numbers into an automated system. The systems described are also suitable for any transfer of token sequences in conversation between a caller and an automated service. Other examples include:

- SMS dictation
- EMail dictation
- EMail addresses
- UK postcodes
- US ZIP codes
- IP addresses
- URLs
- Telephone numbers
- General alphanumerics

  - account numbers,
  - product codes,
  - national insurance numbers,
  - car registration plates, etc.

**Recogniser 2: Spoken Input Recognition**

The following words cover the majority of observed giver vocabulary items used by UK English speakers in spontaneous number transfer dialogues:

{ oh zero nought 1 2 3 4 5 6 7 8 9 double triple ten eleven twelve thirteen fourteen fifteen sixteen seventeen eighteen nineteen twenty thirty forty fifty sixty seventy eighty ninety hundred no yes yeah yep that's_right sorry pardon }

Natural numbers in the range "eleven" through "ninety-nine" are extremely rare in UK English telephone number transfer dialogues and are included for illustration purposes only as they are more common in the US. They would probably be omitted in a practical UK solution. Also in the UK "hundred" is only used in the context of STD codes such as "oh 8 hundred".

Recognition of the input utterance may be done using any language model or grammar designed to model the range of spoken utterances for a natural digit block. For example a bigram based on observed word-pair frequency in real human-human or human-computer chunked number transfer system would be suitable.

**Parser 3: Spoken Input Interpretation**

The output of the input digit block is a single sequence of symbols representing the meaning of the input from the giver. The dialogue processor 5 expects this sequence to contain any sequence of the following set of symbols: {0 1 2 3 4 5 6 7 8 9 N Y S P ? A }

This sequence may be derived from the input set of recognised words by a simple parser An example of one suitable parser is shown in Table 1. It is based on an ordered set of cascaded regular expression substitutions, formally cascaded finite state transducers (cFST's), operating on the top-1 word list candidate of the speech recognition output.

One important thing to note is that in the current design the speech recogniser is delivering a top-1 sentence to the parser without any confidence measures. Therefore a simple preprocessing stage is required to represent low-confidence utterances. Any single word in the input utterance which has a word-confidence level below a pre-defined threshold is replaced by the symbol '?' which is retained unaltered through the subsequent cFST translation. In addition, any utterances which are wholly rejected by the speech recogniser are replaced by a single 'A' for abort in the input to the cFST. Silent utterances are presented as empty strings (indicated here by the symbol "ε") to the parser.

The cFST shown in Table 1 is broken into two stages. Stage 1 simply regularises natural numbers to a canonical form and removes filled pauses if they are present in the input string. Stage 2 interprets the synonymous forms of other qualifier words. These words are used by the giver for confirmation (Y), contradiction(N) and requests to hear the previous digit block again (P). Note, "sorry?" without subsequent digits will be treated as "pardon" (requesting a repetition of the echoed block) and becomes the symbol 'P', however "sorry" followed by digits will be treated as "no" (introducing a correction). This matches observed UK caller behaviour. Completely empty strings representing silence are mapped to the symbol 'S'.

Table 1.

| Simple parser to derive the input for dialogue rules as shown in Figure II. from the output of the speech recogniser. Cascaded finite state transducers are used (cFST's) | | | |
|---|---|---|---|
| **Input Symbols** | | **Output symbols** | **Input Context** *(pre__ suff)* |
| **Stage 1. Number Regularisation** | | | |
| erm \|\| uh | → | ε | |
| zero \|\| oh \|\| nought | → | 0 | |
| ten | → | 10 | |
| eleven | | 11 | |
| twelve *etc...* | | 12 | |
| twenty | → | 2 | __{1,2,3,4,5,6,7,8,9} |
| twenty | → | 20 | |
| thirty | → | 3 | __{1,2,3,4,5,6,7,8,9} |
| thirty *etc...* | → | 3 0 | |
| Input Symbols | | Output symbols | Input Context *(pre__ suff)* |
| double 0 | → | 0 0 | |
| double 1 *etc...* | → | 1 1 | |
| triple 0 | → | 0 0 0 | |
| triple 1 *etc...* | → | 1 1 1 | |
| hundred | → | 0 0 | |
| | | | |
| **Stage 2 Qualifier Regularisation** | | | |
| yes \|\| yeah \|\| yep \|\| that's_right | → | Y | |
| no \|\| sorry | → | N | —{0, 1, 2, 3, 4, 5, 6, 7, 8, 9} |
| pardon \|\| sorry | → | P | |
| no | → | N | |
| ε | → | S | *sentenceStart sentenceEnd* |

### 2.2.3 Grammar and dialogue state dependent silence timeouts

Human detection of the end of digit blocks employs a mix of prosodic interpretation and predictive expectations based on previous experience of typical syntax, chunking preferences for telephone number transfers, and expectations based on the current dialogue state. In human-human dialogue inter-chunk boundaries can be responded to before any silence is observed at the chunk ending . In this dialogue implementation, variable length silence timeouts based on grammar triggers are used to emulate the syntactic aspects of this effect. These are dependent on the current dialogue state and the lexical history of the input to the current point. This could be augmented with prosodic recognition in the future.

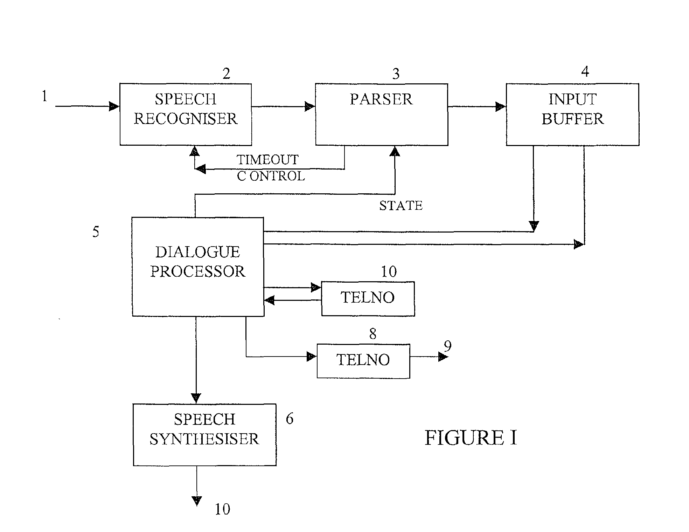

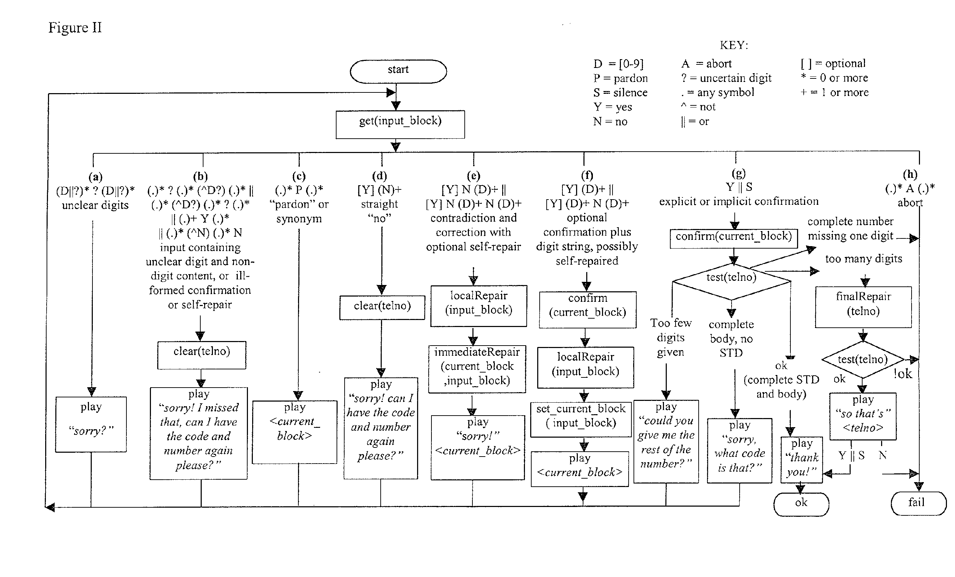

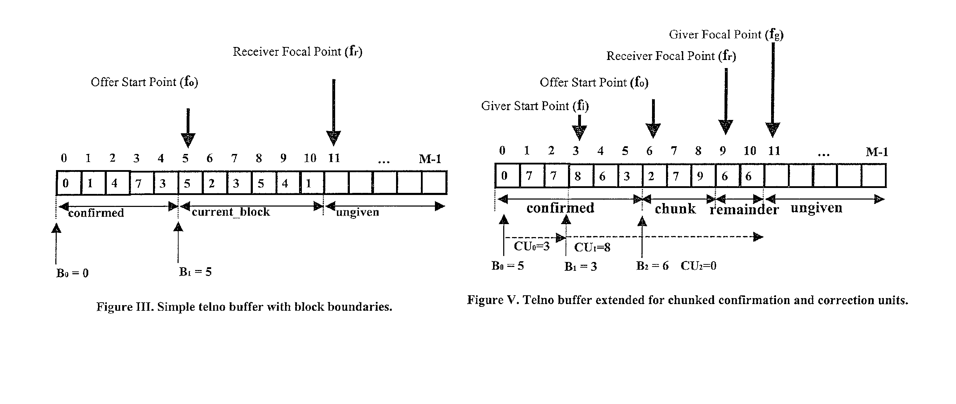

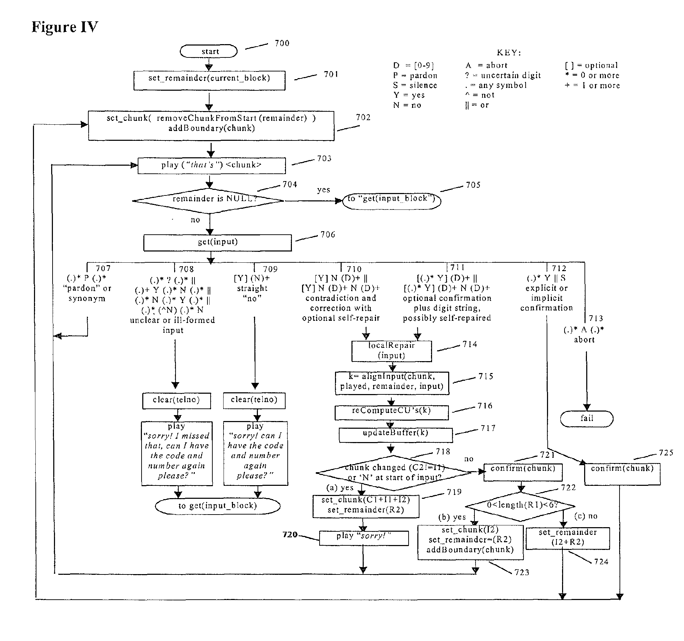

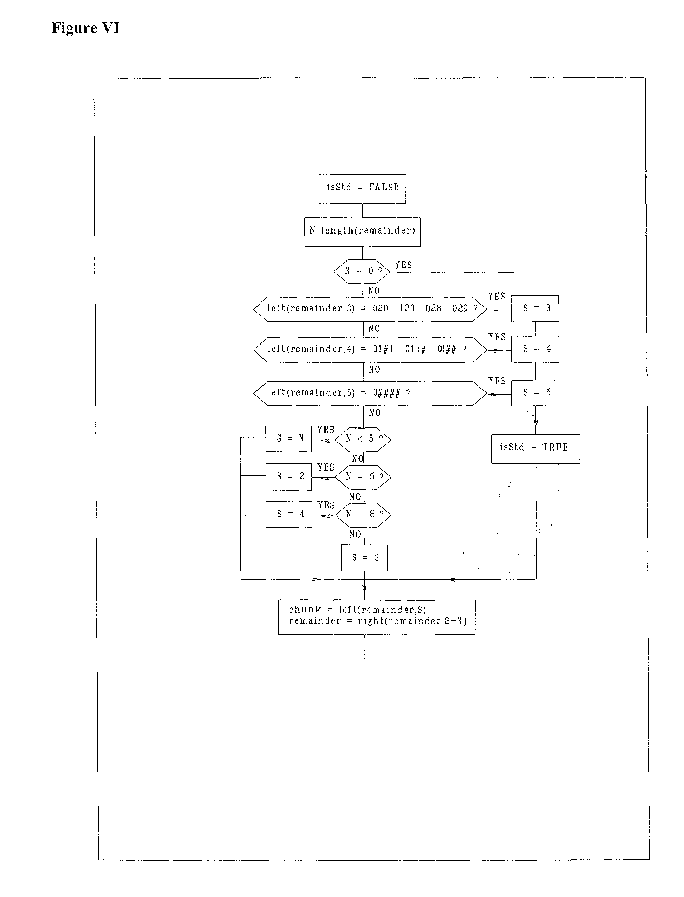

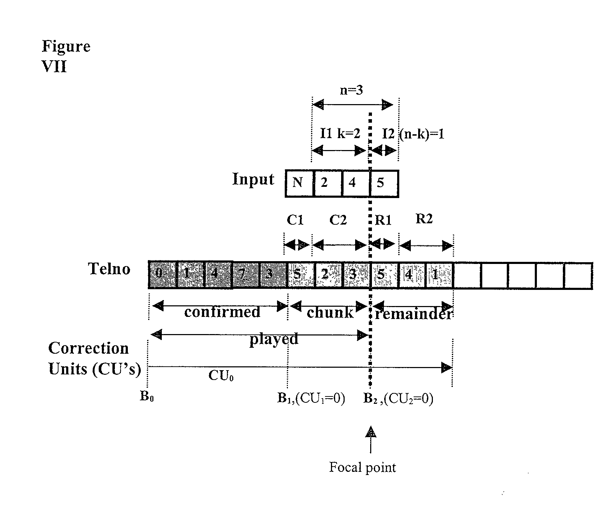

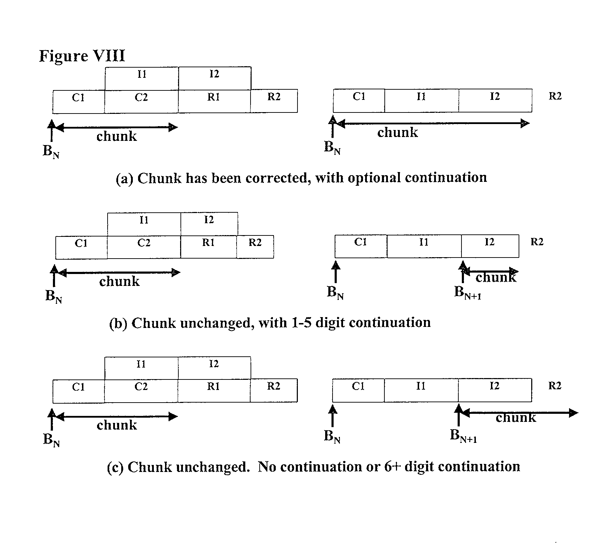

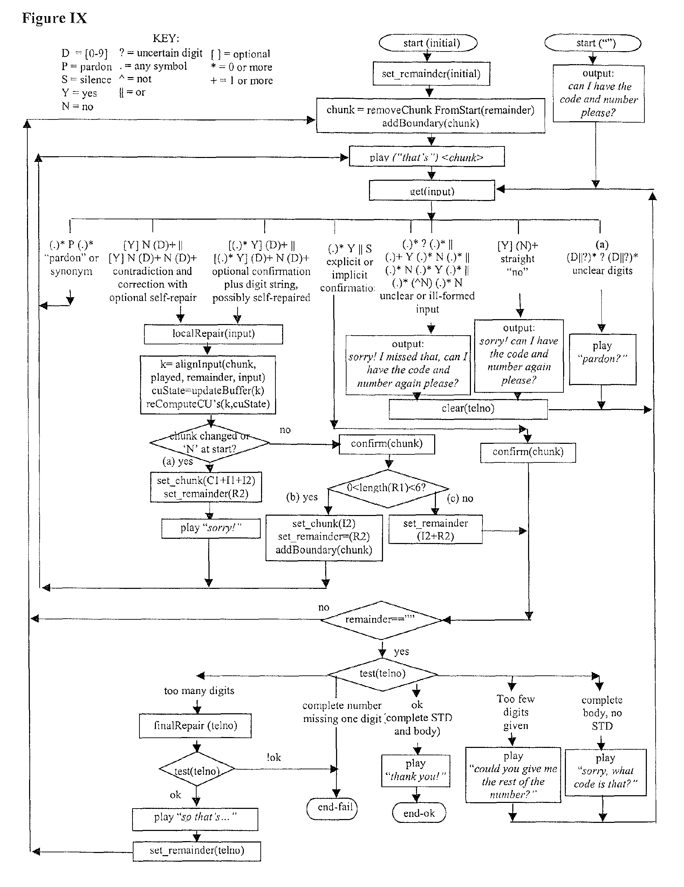

To achieve this a parser needs to be integrated with the speech recognition acoustic search. One way to implement this is to have a grammatical trigger pattern associated with each timeout value. Table 2 shows the ordered set of different timeout values in this design. As in the figure, trigger patterns are expressed as finite state grammars (e.g. regular expressions). Then given an ordered set of triggers whichever trigger first matches the highest-scoring symbol history of a particular path through the language model or grammar to the current search token - its equivalent timeout value is adopted from that point onwards for that path until another trigger occurs.

The Nuance Speech Recognition System "Developer's Manual" Version 6.2 (published by Nuance Corporation of California, USA) describes a method for retrieving partial recognition results at pre-determined intervals, and acting on these to modify timeouts depending on the partial recognition result.

In the framework we describe here, the most recent partial result (the highest-scoring symbol history up to that point) is compared to a grammatical trigger pattern to determine the end-of-speech silence timeout to apply. Table 2 shows the ordered set of different timeout values in this design. Trigger patterns can be expressed as finite state grammars (e.g. regular expressions). Example trigger patterns are also given in the table. Given an ordered set of triggers the timeout to apply during recognition would be given by the first trigger to match the end portion of a partial recognition result - its timeout value is adopted from that point onwards for the current recognition until another trigger occurs. A time interval between receiving partial results of 0.1s is sufficient to implement this feature.

An alternative method would be to define patterns which must match the whole of the utterance from the start. This approach may be less prone to substitution errors of small patterns during the partial evolution of the result.

In the table, the pattern demoted (std) is equivalent to the following regular expression, using the notation of the perl programming language (for example in 'perl in a nutshell', ISBN 1-56592-286-7

std = (^020)||(^023)||(^024)||(^028)||(^029)||(^01[0-9]1)||(^011[0-9])||(^0[3-9][0-9][0-9]) || (^0[1-9][0-9][0-9][0-9])

Table 2.

| Grammar dependent silence timeouts. | | |
|---|---|---|
| **Value** | **Pattern** | **Description** |
| $T_S$ | $\varepsilon$ | Timeout for pure silence detection |
| $T_{STD}$ | (std) | Reduced timeout at the end of an STD code pattern (when STD is expected) |
| $T_Y$ | Y | Extended timeout following a 'yes' (except where dialogue already has a full number) |
| $T_{ND}$ | ND | Extended timeout during digit entry following a 'no' |
| $T_N$ | N | Extended timeout immediately following a 'no' |
| $T_D$ | ? | Default silence timeout (lengthened if STD code is expected and not yet complete) |

Table 3.

| Dialogue states for modifying grammar dependent timeouts. | |
|---|---|
| **State** | **Description** |
| STD | An STD code is expected - This state occurs after each request for code and number, or a request for the code alone. |
| Chunk | A chunk is expected - An STD is not expected and not enough digits have yet been grounded to complete a telephone number |
| Inter-chunk | Chunk input during chunked confirmation - i.e. the grounding will be partial and digits have been given that are yet to be echoed. |
| Completion | A completion signal is expected - Enough digits have been grounded to complete a telephone number. |

Table 4.

| Illustrative values of timeouts | | | | | | |
|---|---|---|---|---|---|---|
| State \ Timeout | $T_s$ | $T_{STD}$ | $T_{ND}$ | $T_N$ | $T_Y$ | $T_D$ |
| STD | normal (4.0?) | 0/1.5 | 1.1/1.5 | $T_{ND}$ | 2.0 | 1.5 |
| Chunk | normal (4.0?) | 0.7/1.5 | 1.1/1.5 | $T_{ND}$ | 2.0 | 0.7 / 1.5 |
| Inter-chunk | 2.0 | 0.7 | 1.5 | $T_{ND}$ | 0.7 | 0.7 |
| Completion | reduced (3.0?) | 0.7/1.5 | 1.1/1.5 | $T_{ND}$ | 0.7/1.5 | 0.7/1.5 |

Table 3 shows the different states of the dialogue used by the algorithm to select the particular numerical values (in seconds) of the grammar dependent timeouts - shown in Table 4. Where two values are given for the same timeout parameter in the same state, the first is designed for a chunked style of number input, and the second for an unchunked style. Exact values are not given for $T_S$ (except in the inter-chunk state) or for $T_N$, since these timeouts were not automated in the trial; but possible values for $T_S$ are suggested, based on timings from the second trial. The exact timeout values might well be different in an implementation with an automated recogniser, but the pattern of relatively long and short timeouts should be similar.

$T_D$ Once speech is detected, the acoustic search begins with a single default value $T_D$ which could be though of as having a grammatical trigger matching the start of an utterance. The value of $T_D$ is itself modified depending on the state of the dialogue. For example it is lengthened when an STD code is expected, to reduce the chance of a timeout during slow STD presentation - the need for this was discovered during the second trial. This value is also reduced in the inter-chunk state to keep the dialogue moving quickly.

$T_{STD}$ This triggers for any valid STD code. When the dialogue is in the STD state e.g. following the initial "what code and number?" prompt, rapid detection of the end of this chunk is essential if a "chunked" style of interaction is preferred by the dialogue designer. Thus at these points $T_{STD}$ may be set to zero - the recogniser returning a match as soon as it is sure that it has confidently recognised the final symbol of an STD sequence even if no silence has yet been detected following this. $T_{STD}$ can be set to the default value $T_D$ or even made larger than this to implement an "unchunked" dialogue style. In dialogue states where an STD code is not expected, $TS_{TD}$ has the same value as $T_D$.

$T_Y$ The timeout is lengthened after a "yes" when the dialogue is in a state where a complete number or body has not yet been received (STD or chunk state) (This reduces the risk of giving a "rest of the number" prompt after "yes" when the giver was about to give the rest of the number anyway.) . This value is also reduced in the inter-chunk state to keep the dialogue moving quickly.

$T_N$ The timeout is lengthened immediately after a "no", so that the beginning of a "no <digits>" correction sequence is not misinterpreted as a simple "no". The timeout here may be longer than the timeout $T_{ND}$ during the following digit sequence, since a longer pause is liable to occur immediately after the "no" than at a later point in the utterance.

$T_{ND}$ The timeout is lengthened during a digit sequence preceded by "no" and also another digit. (This allows for the tendency of some givers to speak more slowly during a correction, and reduces the risk of timeout within an intended correction sequence leading to a wrong repair of the number.)

$T_S$ Pre-speech silence detection timeout value is longer than default time-out ($T_D$). This is used to detect silence as a completion signal at the end of number transfer. Most current recognisers already implement this feature.

### Cut-through

Any input during the echoing of a block is ignored. This is a change from earlier versions of the design in which interruption by the giver was allowed. The change was made in the light of the observation thatgivers tend to defer to the follower when overlap occurs. Also ignoring attempts at interruption helps to enforce the intended chunked echo protocol, and should reduce the risk of confusing the giver.

### Chapter III: Dialogue, first version

### Process Input Block

### Dialogue design

The main dialogue process performed by the processor 5 is shown in Figure II.

The number transfer dialogue is entered at the top of the flowchart with the question "what code and number please?". The preceding dialogue is not important for this invention . The purpose of this dialogue fragment is to correctly fill the *telno* buffer 10 which is initially empty. The basic strategy is to echo each block of digits received from the giver, until the giver gives a completion signal (such as "yes" or "that's right" or "thank you") or remains silent for a pre-defined period following the reading out of an output block. Then if the *telno* buffer constitutes a complete telephone number, with no extra digits, the number transfer is taken to have succeeded and a terminating thankyou is given. The dialogue may then continue - for example to complete a line test or give a reverse charge call.

### Telno buffer structure - first version.

Figure III shows the structure of the simple telno buffer (10). It has a series of locations, one for each digit (typically expressed as ASCII codes or similar). It needs to be long enough to accommodate one whole telephone number plus additional space to accommodate repetitions or errors that may arise en route. In this example the buffer has **M** locations (referred to as locations 0 to M-1).

The buffer is split into three regions. These regions record what state individual locations are in. These regions are 'confirmed', 'current_block', and 'ungiven'. These regions are contiguous, and represented by two pointers:

The 'offer start point' **FO** points to the start of the last digits to be output.
The 'receiver focal point' **FR** points to the location immediately AFTER the last digits to be output.
By definition:

confirmed =(0,FO-1)
current_block = (FO , FR-1)

In the text that follows these relationships are considered to always hold true. Re-definition of FO for example, by definition means that the end point of confirmed has been re-defined also. Conversely, re-assignment of 'confirmed' , for example, would alter the pointer FO accordingly as well.

The different regions in the buffer can be thought of as a way of assigning a particular state to each token in the buffer. The purpose of the dialogue can be seen as gathering values for these tokens and also progressing their dialogue grounding states from 'ungiven' through 'offered' (represented as the 'current_block') and to 'confirmed'. The use of contiguous regions to represent this state is adequate for this simple first version of the dialogue. These states have the following definitions:

| | |
|---|---|
| **ungiven** | no token value has been received from the giver yet for this token. |
| **offered** | value has been received and offered by the receiver for confirmation |
| **confirmed** | the token has been confirmed by the giver. |

These states will be further developed in later versions of the dialogue.

In the example shown, FO=5 and FR=11, Hence, confirmed=(0,4), and current_block=(5,10). The ungiven region is simply the remainder of the buffer which has no values set, and it will be omitted from diagrams where it adds no clarity. At the start of the enquiry, FO and FR =0 are set to zero, i.e. confirmed and current_block are set to (0,-1). By convention, if the end index of a region is before the start index, the region is considered to be empty or null (""). As the enquiry progresses these regions will change under the control of the dialogue processor (5). For clarity, these regions will be shown in figures as arrows spanning a region within the buffer, and their index values will be omitted.

The buffer also contains an ordered list of 'block boundaries'. A block boundary is simply a historical record of the point in the buffer at the start of digit sequences which have been played back to the giver. In the first version of the dialogue, these block boundaries are simply placed at the start of each current_block each time current_block is re-assigned.

Block boundaries are stored as an array of **L** elements indexed from zero (i.e. $B_0$, $B_1$ ... $B_{L-1}$), where L is an arbitrary limit greater than the number of blocks which will be exchanged in a dialogue (e.g. 20 for telephone numbers, as blocks can be as small as one digit and there could be additional correction digits). The value of each entry in the array records the index in the telno buffer where a block has started. In the example, the region marked confirmed will have previously been output as a 'current_block', which started at telno index 0. Therefore block boundary zero points to location zero (i.e. $B_0$ =0). The current_block shown in the figure starts at index 5, so $B_1$=5. This is the last block boundary as it represents the start point of the current_block at this point in time. In the figures, the block boundaries will be shown as arrows pointing to the boundary to the left of the telno entry they are indicating.

The emerging telno buffer is therefore made up of 'blocks' - i.e. the regions between block boundaries. At any given moment, the final block may be taken to be the region from the final block boundary to the start of the 'ungiven' region (i.e. FR).

Block boundaries are recorded for use during the finalRepair().

**Definitions**

A few important definitions are required to fully understand the flowchart.

| | |
|---|---|
| STD | This is any digit sequence which could be a national UK code such as 01473 or 0898. These patterns can be easily represented using a simple grammar. |
| body | This is any digit sequence which could be a full telephone number excluding the STD code. These patterns can also be easily represented using a simple grammar. |
| block boundary | The point in the digit sequence when a sequence of digits began an output of a digit sequence. |
| block | This is a sequence of digits which are being played out, or input, in a dialogue turn. A block may be any length from a whole phone number to a single digit. |

input_block        This is the sequence of digits and symbols which represents the last customer turn as captured by the input buffer 4.

telno              This is the buffer 10 containing the current telephone number hypothesis. It is made up from concatenated input_blocks and retains the block structure.

current_block      This is the sequence of digits within the telno buffer that has been queued for output.

**get(Input)**This function retrieves a single regularised user utterance or 'input_block' from the input buffer 4.

**Input Conditions**

As can be seen in Figure II, once the input block has been captured and regularised, the output of this process is interpreted by the dialogue. The following cases are detected:

(f) Plain digits with optional preceding "yes" - possibly self-repaired digits. If the current_block is not empty then add it to *confirmed.* the input buffer is entered in the telno buffer as the new *current_block* if it is empty (as will initially be the case). If there are digits in the buffer already, the new digits are added to the tail of the telno buffer. (Note: if desired the process could be modified so that input digits given in response to a prompt for the STD code are inserted at the head of the buffer.) If the *input_block* contains a self-repair (e.g. "yes 0 4 no 0 1 4 1"), it will first be repaired using the *localRepair* algorithm described below prior to being added to the telno buffer. This new current_block is then echoed to the giver, and a block boundary added at its start.

(a) Unclear digits. In case of an *input_block* entry that is unclear (e.g. "3 ? 4" with the middle digit being difficult to hear), the *input_block* is not added to telno, and a "sorry?" prompt is played to prompt for a repetition of this block. (This mimics the use of "sorry" found in the operator dialogues.)

(b) Garbled input or ambiguous confirmation. In case of an *input_block* that is ill-formed or ambiguous, including any block with one or more unclear digits plus non-digit elements (e.g. "3 4 5 yes 3" or "no ? ? 5"), the telno buffer is cleared and the giver is prompted for the code and number again. This is a catch-all state intended to match all conditions that other states fail to match. This condition could also be simply treated as an Abort condition (h) if desired.

(c) Pardon. In this case the *current_block* is simply repeated.

(d) Contradiction. A flat contradiction such as "no" in the *input_block* will cause the telno buffer to be cleared, and the giver will be prompted for the code and number again.

(e) Contradiction and digit correction - possibly self-repaired digits. A correction starting with a contradiction word in the *input_block* such as "no 3 4 5" will be taken as a correction of the *current_block.* This is done using the immediateRepair algorithm as described below. If the *input_block* itself contains a self-repair (e.g. "no 0 4 no 0 1 4 1"), it will first be repaired using the *localRepair* algorithm described below prior to conducting the immediate repair after this. Following the Immediate repair the dialogue then says "sorry" and echoes the corrected *current_block.*

(g) Completion signal (silence or "yes"). Once a completion signal is detected *confirm* is extended to include the *current_block,* and the *current_block* becomes null. Then the telno buffer is tested using pre-defined grammar patterns to see whether it is complete or not - test(telno). The following cases may occur

- ok - Complete STD and body. The dialogue says "thank you" and returns telno as the gathered telephone number in the ok state.

- Complete body, no STD code. This can be detected by the fact that the first block does not start with "0". When a complete number body without a code has been received, and the giver gives a completion signal or stays silent after the echo, the system requests the code explicitly. This path, if provided, requires the modification mentioned above under (f).

- Too few digits given. If the giver remains silent or gives a completion signal when the blocks of digits recognised and echoed so far do not make up a complete number or body, a prompt for the rest of the number is issued.

An exception is made in the case where the number is exactly one digit too short, i.e. in the UK it has a valid geographic code (implying that there should be 11 digits in all) but consists of 10 digits. It has been observed in trials that the "rest of the number" prompt was ineffective in this just-too-short case, because it usually arose when the giver thought the 10 digits already given were a complete number. Therefore a number that is one digit too short is treated like an overlength number that cannot be repaired (as described below), i.e. the automated number transfer attempt is terminated in the fail state.

- Too many digits given. This may indicate that one of the blocks of digits (given under condition (f) above) was intended to replace, rather than follow, the digits previously recognised and echoed. To cope with this, *a finalRepair* algorithm is applied to the telno buffer. This final repair algorithm is described in detail below.

Once the final repair has been attempted, the telno is again tested. If this repair succeeds in deriving a valid telephone number (ok), this is read back to the giver for confirmation. If it is confirmed by the giver with the standard completion signal criteria (silence or "yes") then "thank you" is output and the dialogue terminates in the ok state returning the repaired telno buffer. If not, then no further recorded prompts are played and the dialogue terminates in the fail state.

(h) Abort. Whenever the abort signal is received (recognition totally rejected), the current dialogue is immediately terminated and the dialogue returns in the fail state. Alternatively this could be treated as garbled input condition (c) if desired.

For all of these conditions, whenever a block of digits is played out to the giver, the algorithm playBlock(block, endIntonOption) is used as defined in Appendix A.

**localRepair(input_block)**

This occurs if there are any spontaneous repairs within a single input block (e.g. "3 4 5 no 4 6"). The *input_block* is repaired prior to being further processed. If there are no spontaneous repairs in the input then local repair returns the input unaltered. Local repair is operated by a repair-from-end rule, in which if there are at least as many digits after the "no" as before it, the whole sequence of digits before "no" is replaced; if there are fewer digits after than before, only the last N of the digits before "no" are replaced, where N is the number of digits after "no". (So the example quoted would be interpreted as "3 4 6".)

**immediateRepair(current_block,input_block)**

The immediate correction also operates on the *current_block* by a repair-from-end rule, in which the digits in a "no <digits>" sequence are taken as replacing the same number of digits at the end of the current_block, or replacing the whole of the block and continuing the number if there are digits to spare. Once repaired the new current_block - including any extension of it - automatically replaces the old one in the telno buffer.

**finalRepair(telno)**

A human operator can usually interpret all number corrections from a caller in-line during number transfer by using prosodic information, but the present state of speech recognition technology does not support this. Similarity-based detection of corrections where the intent of the giver is not clear from a transcript of what they have said - automatically treating a block as a replacement for the previous block if, for instance, they differ by only one digit - is error-prone, since many telephone numbers contain consecutive blocks which are similar to each other, especially where the blocks arc of only two or three digits.

For this reason, the first dialogue has a cautious strategy when interpreting potentially ambiguous corrections. If the correction is not a clear repair (e.g. An input of a string of digits in the dialogue of Figure II where the input is not preceded with a clear 'No'), it is interpreted as a continuation and simply echoed back to the giver. If the prosody of the echo is reasonably neutral, callers frequently interpret this echo as confirmation of the correction if that was their intent, or as a continuation otherwise. If these points of ambiguity are noted, then they can be used at the end of the dialogue to attempt a repair of the telephone number if it is found to contain too many digits (i.e. a likely sign that there one of our continuation interpretations was actually a correction).

The final repair algorithm therefore attempts to repair an over-length telephone number in the telno buffer by looking for a pair of consecutively entered blocks that are similar enough to be a plausible error-and-replacement pair, and deletes the first of the two if it finds them. (In principle more than one such repair could be allowed in a single number, but for simplicity the present design allows only one repair.)

The final repair algorithm is formulated in terms of *blocks;* in this implementation the units in which the telephone number is read out for confirmation are the same blocks as received on input. (Recall that the telno buffer stores block boundaries as well as the sequence of digits provided by the giver.)

Blocks are considered as potential replacements for all or part of previous blocks. The principle is that only a unit given by the giver can act as a repair to preceding digits.

A modified version, in which input blocks can be read back piecemeal, will be described later (see below: "Chunked Confirmation Option).

The algorithm has five stages, as listed below. Each stage is applied only if the preceding ones have failed. Within each stage, the criterion for applying the operation is that the repair should yield a correct-length number and there should be no other way to get a correct-length number by an operation of the same kind. If at any stage the repair is ambiguous (i.e. there are two or more ways to achieve a correct-length number), the repair attempt is abandoned immediately, without trying the remaining stages.

1. Apply the basic final repair operation - i.e. delete block n-1 if block n differs from it by exactly one digit (through substitution, insertion or deletion).

2. Delete the last L(n) digits of block n-1 if these digits differ from block n by exactly one digit substitution, where L(n) is the length of block n. (This deals with end-of-block repetition following a substitution error, but it could go wrong in cases with insertion and deletion errors, especially in non-geographic numbers where the correct total length is not known.)

3. Delete blocks n-k to n-1 (where k >= 1) if their concatenation is an initial sub-string of block n. (This deals with restarts in cases without a prior recognition error. The initial sub-string is allowed to be the whole of block n: so the algorithm can cope with simple repetition of part or all of the number.)

4. Delete blocks n-k to n-1 if their concatenation differs from block n by exactly one digit substitution. (This deals with a restart following a substitution error, or a late correction in which the blocks since the one with the error are repeated. It could be extended to allow the digits to differ by one insertion or deletion, to cope with restarts following insertion and deletion errors.)

5. Delete blocks n-k to n-1 if their concatenation differs from an initial sub-string of block n by exactly one digit substitution. (This deals with correction and continuation in the same " block, including the case with a restart or a late repair, following a substitution error.)

**Dialogue Wordings**

The message wordings for the dialogue (other than echoes of digits, and the initial prompt and re-prompt which are service dependent) are listed in Table 5.

Table 5

| Message wordings | |
|---|---|
| Function | Wording |
| Confirm number transfer is over | Thank you! (with final intonation) |
| sorry <repaired block> | Sorry ... (apologetic with continuing intonation for subsequent corrected number) |
| can you say that again? | Sorry (with slight question intonation) |
| prompt for rest of number | Could you give me the rest of the number? |
| request code | Sorry, what code is that? |
| "so that's <repaired number>" | So that's... (complete number to be concatenated, with ending intonation on last block) |

**Effect of time-out values on dialogue styles in the basic design**

By adjusting the time-out parameters for the basic dialogue design shown in Figure II, different styles of behaviour emerge from the design.

It is possible to enforce a "chunked" dialogue style, with a low value for $T_{STD}$ (e.g. 0.4s) during the body of the number, or an "unchunked" style, with the $T_{STD}$ set to default $T_D$ or longer.

With the "chunked" style, the giver will typically be interrupted immediately after giving the STD code with an echo of this code. Giver behaviour is usually such that the remainder of the telephone number is then given in chunks with the giver pausing for feedback after each chunk. In this style, the dialogue has thus primed the giver for a chunked style through rapid intervention at the start.

With the "unchunked" style, the giver will not be interrupted after the STD and is left to deliver the number until they choose to wait for the dialogue to respond by remaining silent.

In this case many, but not all, givers will go on to deliver the whole number in one utterance. Whenever the giver chooses to wait for a response a full echo will be given of the utterance to this point. In this style the giver selects the chunking style they prefer, but may be unaware that there is an option.

Both of these styles always echo each input chunk completely after each input regardless of its length (although these echoes did adopt an internal chunked intonation pattern if they were longer than 4 digits - See Appendix A for details).

**Chapter IV: Dialogue, second version**

An extension to the simple strategy is now described in which the end-of-block conditions for input are the same as in the "unchunked" case, but fully paused chunking is used during the readback of longer digit blocks during confirmation i.e. parts of giver input chunks could be grounded bit by bit rather than all at once.

The dialogue with this third strategy follows that described with reference to Figure II except when an current_block (given without an initial "no") contains more than five digits. When this happens, instead of the output being simply an echo of the whole current_block, a chunked confirmation sub-dialogue is entered, which is as shown in Figure IV. This sub-dialogue replaces the simple "play <current_block>" occurring in the basic dialogue and appearing in paths (c), (e) and (f) of Figure II. During the chunked confirmation sub-dialogue, successive chunks, typically containing three or four digits each, are echoed back to the giver; there are pauses between chunks, in which the giver can respond by confirming, contradicting, correcting or continuing the digit sequence just echoed. The first chunk in the sequence is preceded by "that's" if this is the first echo of a digit block in the current dialogue, or the first echo following a re-prompt for the whole code and number. The sub-dialogue ends with the output of the last chunk of the current_block, at which point the main dialogue resumes and possible inputs from the giver are dealt with as in Figure II.

The division of *current_block* into chunks is described in Appendix A and illustrated in the flowchart of Figure VI

Within a chunked confirmation, if the giver remains silent during an inter-chunk pause, or says "yes" or a synonym, the readback simply proceeds to the next chunk. As before, in case of a straight "no", the telno buffer is cleared and the main dialogue is resumed with a "code and number again" prompt. The processing of input containing digits is more complex, because such input may be (a) a correction or repetition of digits that have just been echoed, or (b) a continuation of the number, repeating and possibly continuing beyond digits that were given in the original current_block but that have not yet been echoed, or (c) a combination of (a) and (b). The processing of inter-chunk digit input is as follows. Note that although block boundaries and correction unit boundaries are recorded in the buffer, this information is not used until the final repair stage later.

This modified version this allows more flexibility in the echoing back of digits to the giver, the idea being that longer input blocks of digits can be broken up into shorter blocks of a more manageable length for confirmation purposes. Secondly, it offers a more sophisticated treatment of the input given by the giver in response to requests for confirmation, in particular in allowing more flexibility in the interpretation of the input as being a correction, repetition or continuation of the echoed output, or a combination of these. Thirdly - as a consequence of this - it aims to preserve additional information about the history of the dialogue that has taken place, in order to continue to facilitate the correction of some of the incorrect decisions that have been taken at the "immediate repair" stage being corrected in the "final repair".

**telno buffer structure - second version**

In order to facilitate these extensions, the definition of the chunk buffer needs to be slightly extended. The progressive confirmation of sub-chunks of the current_block requires that there is a mechanism to record the parts which have been confirmed, those which are currently being confirmed, and those which remain to be confirmed. Also the fact that inputs may now span multiple output chunks needs to be recorded.

Firstly during chunked confirmation, the buffer is given the additional region remainder by separating the FR pointer recording the end of the last digit sequence output (now termed 'chunk' rather then 'current_block') , from a new pointer, also noting the end of givers' input. Secondly, the starting point of the last input is explicitly noted. Thirdly, the definition of block boundaries are clarified, and fourthly the concept of Correction Units introduced.

Figure V shows the structure of the extended telno buffer.

The relationship between the different regions of the buffer are described by four pointers. These are as follows:

The 'giver start point' FI points to the start of the last giver input;

The 'giver focal point' FG points to the location immediately AFTER the end of the last giver input;

The 'offer start point' FO is defined to be the pointer to the start of the chunk region.

The 'receiver focal point' FR is defined to be a pointer to the location immediately AFTER the end of the chunk region. Hence:

confirmed =(0,FO-1)
chunk =(FO,FR-1)
remainder = (FR, FG-1)

The definition of chunk can be seen to be identical to that of current_block. Apart from the exceptional use, described below, of 'current_block' to pass the input into the dialogue of Figure IV, the two are in fact exactly the same thing.

In the text that follows the above relationships are considered to always hold true. Re-definition of FO for example, by definition means that the extent of chunk has been re-defined also.

The addition of the 'remainder' region can be thought of as adding an additional state - 'given' - to the states which values in the token buffer can adopt. This state represents tokens which have been offered by the giver but are yet to be 'offered' by the receiver for confirmation.

Recall that block boundaries have already been described which record the history of the start of each block of digits which are played to the giver for confirmation - i.e. the history of the pointer FO. Therefore, in this extended design, block boundaries are still recorded at the start of each chunk in chunked confirmation. The only difference in this new design is that a user input can now span a number of blocks.

Finally therefore, given this difference, associated with each block boundary, are correction units (CU's). These are intended to capture the points at which inputs have been interpreted as continuations but may actually have been corrections. Thus for each location where an input is interpreted to be pure continuation after the previous chunk, a CU is recorded which captures details about the extent of this input - that is the history of the pointers FI and FG, on the occasions when FI=FR.

By definition in this extended dialogue design, a correction unit (CU) must always begin at a block boundary. It also records the number of locations forward from the block boundary that the input spans. The block boundaries and correction units (CU's) are together used to record the coarse structure of the history of the dialogue, recording the block structure of inputs, and the block structure of outputs. This information is then used during finalRepair( ).

The representation of a CU is done by referring to the block pointer of the same index which indicates its start, and giving the CU an extent which counts the number of digits form that point to the end of it. Hence

$$CU_5 = 10$$

means that correction unit number five starts at block boundary five and extends 10 digits from that point. If it is set to zero then there is essentially no CU at that block boundary.In the example of Figure V, the giver has given two input utterances which were both assumed to continue just after the last output. One of these CU's started at block boundary 0, and lasted three digits, the second started at block boundary 1 and lasted for eight digits. There is no correction unit starting at block boundary 2. This is denoted as $CU_2$=0.

A single CU may correspond to a single block, or may span two or more blocks; it usually consists of a whole number of blocks, but this may not always be the case, depending on how corrections are handled. It is noted that CU's may overlap; however, in the current design, only one CU can start at any block boundary. During finalRepair() all Block boundaries, even block boundaries without CU's are considered as potential sites for repair, but only CU's can be used as a starting point for repair of another block. For a more detailed definition of correction units see below: "Correction Units and the finalRepair Algorithm".

**Definitions**

| | |
|---|---|
| *chunk* | The chunk most recently echoed for confirmation |
| *played* | Current contents of confirmed concatenated with chunk i.e. the digits that have been confirmed to date plus the ones currently in the process of being confirmed. |
| *remainder* | The digits that have been received from the giver but have not yet been echoed |
| *input* | The digits in the inter-chunk input, after application of any self-repair. |

**New Definitions**

| | |
|---|---|
| Chunked confirmation | The process of confirming a sequence of digits by confirming it one small chunk at a time, pausing for input after each chunk. |
| Inter-chunk input | Something is said after one such inter-chunk pause. |
| Block boundary | A boundary point in the value buffer where a chunk readout has happened sometime in the past. |
| Block | A region of the value buffer between two block boundaries, or between the final block boundary and the end of the current chunk. |
| Correction Unit (CU) | A region of the value buffer starting at a block boundary, spanning at least one whole input from the giver, and aligned at the start with at least one input from the giver. |
| Current CU | The most recent correction unit in the token buffer with a non-zero value. |

The process of Figure IV starts at Step 700. At Step 700, the values of FO and FR define the current_block in Figure II and this current_block contains the last input which in the previous design would have been played out in full to the giver.
Now, at step 701, instead of playing this whole block out, we set the whole of the remainder region to cover this current_block, and re-define the current_block, now named chunk, to be empty. The function set_remainder() does this as follows.
Firstly, set the new pointers FI and FR to span the current_output as it is defined in Figure II.

$$FI=FO$$

$$FG=FR$$

Next re-set FR to the start of this input, making chunk empty, to indicate that we have not yet played anything out at all.

$$FR=FI.$$

Thus the remainder is now set to the last giver input. Recall that by definition, remainder = (FR, FG-1).
At Step 702, a chunk is removed from the start of this remainder. The length of the returned chunk, len, is determined as described in Appendix A and illustrated in the flowchart of Figure VI. The new region chunk is now re-defined to be the first len tokens following FR.
Thus:

$$FO=FR$$

$$FR=FR+len$$

Recall by definition chunk=(FO,FR-1). This will be the first part of remainder to be played out to the giver. A block boundary ($B_0$ on the first pass) is marked at the beginning of the new chunk to record this new FO.

At Step 703, chunk is played. If at Step 704, the remainder is null (i.e. FR=FG), control reverts (705) to Figure II, Step 1??. Recall at this point that current_block is synonymous with chunk because they both depend on FO and FR. Thus control will continue in Figure II now treating only the last chunk that was played as the current_block.

Otherwise, if remainder is not null, the input buffer is read at Step 706. Various types of non-digit input at 707 to 709, and 713 are dealt with much as in Figure II.

Isolated 'Yes' inputs (Y) or silence (S) (Step 712) are treated as simple confirmation of the chunk. At step 725 the confirmed region is extended to cover the chunk region, and chunk is set to null. This is done by:

$$FO=FR$$

Digit input at 710 or 711 are dealt with firstly (as in Figure II) by local repair if any internal correction at 714. It then moves on to the alignInput function of Step 715.

**alignInput(chunk,played,remainder,input)**

This function (see Figure VII) returns the value k, which is the number of digits of *chunk* which would be replaced given the lowest-cost alignment of the n digits in *input* against a concatenation *of played* and *remainder,* where the cost is the number of digit substitutions. k=0 signifies a pure continuation is the lowest cost interpretation of the input. k=n signifies that the whole input is a correction of digits which have already been played.

This process takes the input and:

1. Compute the alignment distance $d_0$ with k=0, i.e. for the "pure continuation" interpretation of the input. (If input is a contradiction - i.e. (via Step 710 rather than 711) prefixed by 'N'- then this step is skipped as it is assumed that input must contain an element of correction in it).

2. For k from 1 to n, compute the alignment distance $d_k$ (for the interpretation in which the first k digits are repetition or correction of the final digits in *played* and, if k<n, the remaining n-k digits are continuation into and maybe beyond the digits in *remainder).*

3. Choose the value of k with the smallest alignment distance. If there is a tie, larger values of k are preferred to smaller ones, except that pure continuation (k=0) is preferred to a mixture of repetition/correction and continuation (0<k<n).

The "alignment distance" $d_k$ is the number of substitutions needed to convert between the *input* string and the string against which is it being aligned (composed of the last k digits in *played* and the first n-k digits in *remainder).* If k exceeds the number of digits in *played,* the excess digits at the beginning of the input are treated as being inserted at the beginning of the echoed number, and the insertions are penalised like substitutions: i.e. each inserted digit contributes 1 to the alignment distance. If n-k exceeds the number of digits in remainder, the excess digits at the end of the input contribute nothing to the alignment distance, i.e. continuation beyond what has previously been given is not penalised.

With the special exception of insertion at the start *of played;* this current embodiment only considers the possibility of substitution by the *input* for current values in *played.* This is because observed speech recogition errors for digit recognition are more likely to be substitutions than insertions or deletions. However, insertions and deletions are possible, and this algorithm is capable of being general for any token sequence such as alpha-numerics (e.g. post-codes) or even natural word sequences (e.g. a simple dictation task). The alignInput algorithm can be straightforwardly extended to consider insertion and deletion errors. One such method to do this is to use dynamic-programming alignment (DP matching), such as the algorithm described in our International patent application WO01/46945, or any other DP alignment algorithm as is well known to those skilled in the art. If insertions and deletions are to be allowed in alignInput then, in the following description, the update of the buffer pointers following input, the re-assignment of correction units, and the block boundaries, all need to take into account the insertion and deletion effects. This can straightforwardly be done by shifting the pointers following the modification point to the left following deletions and to the right following insertions.

In the current embodiment, the cost of substituting in the different regions of the buffer is uniform. In an alternative embodiment, it could be desirable to weight the cost of a substitution according to what state the token being substituted is in. For example the following weights could be used:

Wconfirmed = 1.3 (for the confirmed region)

Woffered = 1.0 (for the offered region i.e. chunk or current_chunk)

Wgiven = 0.9 (for the remainder region).

If these weights were used then it would cost more to align differing tokens in the confirmed region than the offered region for example. This is because it has been confirmed and the input is thus less likely to be a correction of this region. Correction of the given region could be cost less because there has been no attempt to ground it yet.

Also, it is possible to use specific weights for certain symbols. This technique is well known in the application of DP matches. For example there may be an acoustically unique symbol with great importance which can be used as an anchor in the match. Take the 'slash' (/) and 'colon' (:) symbols in internet URL's for example. They are both acoustically strong which means that the recogniser is likely to get them right often. They also denotes important structure in the input. By giving the slash and colon a higher substitution cost, e.g. 2, we can ensure that any corrections of regions of the buffer are highly likely to align with these symbols. These symbols may also be very important when splitting-up regions of the buffer for chunked confirmation.

**Using the aligned input**

Once the best value of k has been determined, then an appropriate dialogue response is required. Figure VII shows this situation. Essentially it is a more sophisticated version of the "immediate repair" described with reference to Figure II. I1 is now intended to replace C2 and I2 will replace R1. However it is possible that I1 and C2 are identical (i.e. the giver has repeated some of the chunk to give positioning to the correction). If this is the case I1 is not a repair for C2 and thus the dialogue need not treat it so. More precisely:

- I1 is the first k digits *of Input*

- I2 is the last (n-k) digits *of Input*

- C1 is all of *Chunk* except the last k digits (or null if k>= the length of *Chunk)*

- C2 is the last k digits of *Chunk* (or the whole of *Chunk* if k >= the length of *Chunk)*

- R1 is the first (n-k) digits *of Remainder (* or the whole of *Remainder* if (n-k) >= length of *Remainder)*

- R2 is all of *Remainder* except the first (n-k) digits (or null if (n-k) >= the length of *Remainder)*

or notated as co-ordinate pairs in the buffer:

$$C1=(FO,FR-k-1)$$

$$C2=(FR-k,FR-1)$$

$$R1=(FR, FR+n-k-1)$$

$$R2=(FR+n-k,FG)$$

If any of these duples has an end index that less than the start index it is considered to be 'null'.

**updateBuffer(k)**

Firstly, at step 716, the values in the telno buffer are updated with their new values from the input given the selected alignment value k.

If k is zero, i.e. a pure continuation, then the new giver start point FI will be set to the receiver focal point (FR).

If k is non-zero and the length of I1 is equal to or shorter than the length of chunk, i.e. the chunk is partially or fully corrected, then the new giver start point will be set to the start of I1.

If k is non-zero and the length of I1 is longer than chunk, i.e. a full correction of chunk with insertion at the start of chunk, the current remainder needs to shifted up to make room for the insertion, and FR and FG must be corrected accordingly.

In all three cases, once the new giver start point (FI) has been determined and the buffer stretched if necessary, the new input needs to be copied into the buffer at this new FI, and the extent of remainder extended if it has gone beyond the corrected FG.

In the following psuedo-code for the function updateBuffer(k), the variable 'ins' is used as a temporary variable to note the length of an insertion if one is found. The return value 'CUstate' is used in the next function reComputeCU's to decide how to change the CU values.

```
if (k==0) {  ** Pure continuation.  CU condition A **
        FI=FR
        CUstate="A"
}
elseif (k<=(FR-FO)) {   ** Correction of part or all of chunk.  CU condition B **
        FI=FR-k
        CUstate="B"
}
elseif (k>(FR-FO)) {  ** Correction of all and insertion before chunk.  CU condition C **
        FI=FO
        ins=k-(FR-FO)
        telno.value(FI+ins .. FG-1+ins) = telno.value(FI .. FG-1)
        FR=FR+ins
        FG=FG+ins
        CUstate="C"
}

telno.value(FI .. FI+n-1) = input(0  .. n-1)
if ( (FI+n)>FG ) {FG=FI+n}
return cuState
```

**reComputeCU's()**

Using the CU state calculated at step 716, Step 717 modifies the correction units if necessary. The rules for doing this, and the reasons underlying these rules are described in detail later in section 'correction units and the final repair algorithm'.

**Deciding the next chunk.**

After changing the values in the telno buffer, and updating the correction units, the following three conditions are managed by the dialogue to keep this correction grounding understandable by the giver:

*(a) Chunk* has changed (I1≠C2) or input is an explicit contradiction (i.e. starting with 'N' ). this condition is recognised at Step 718, exit "Yes".

In this instance (Step 719), the current chunk is set to span C1 plus the whole of the input (C1+I1+I2) and remainder is set to be R2. Pointer FR is thus moved to the start of R2. Then an announcement is played, "sorry" (Step 720) followed by echoing of the corrected chunk in its entirety at Step 703. N.B It is possible for I1 to be longer than C2 (and hence C1 is empty) due to the alignment backing-off into earlier played digits than the current chunk. Hence:

FO=FO (i.e. unchanged)

$$FR=FR+n-k$$

As FO is unchanged, no new block boundaries are created in this case.

(b) *Chunk* hasn't changed (I1=C2) and I2 is 1-5 digits (Step 718, exit "No"; Step 722, exit "Yes").
In this case the current chunk is considered confirmed, and the continued part of the input I2 is prepared to be played out as the next chunk.
Thus in step 721, confirm(chunk), the pointer FO is moved to just after the end of chunk.

$$FO=FR$$

Then at Step 723, the next chunk is then set to span I2 and, the new remainder becomes simply R2 again by:

$$FR=FR+n-k$$

As FO has changed, a block boundary is set with the value of FO. This next chunk is echoed in its entirety at step 703.

(c) *Chunk* hasn't changed and I2 is empty or more than 5 digits (Step 718, exit "No"; Step 722, exit "No").
Again, the current chunk is confirmed at step 721, so the pointer FO is moved to just after the end of chunk. (FO=FR) In this case, I2 has got too big to confirm as a single chunk. Instead, *remainder* is set to be I2 plus R2, Hence:

$$FR=FG$$

The process returns to the standard process (Step 702) of finding the first chunk in it to be confirmed, and as FO has changed, a block boundary is set with the value of FO. (this is what addBoundary (chunk) does)

Figure VIII illustrates the above by showing how and when new block boundaries are created. N.B. In case (a) a new chunk is created which overlaps the previous chunk but there is only one block boundary.

**Correction Units and the finalRepair algorithm (second version)**

**Correction Unit Definition**

Conceptually a CU represents a block of digits as input by the giver. That is to say in the simple case the region stretching from FI to just before FG. However, inputs can themselves be interpreted as corrections or repetitions of information input in previous utterances. In this case the original correction unit may be retained, but altered, and maybe lengthened, by this new input
Figure VII shows the *confirmed* values, the current *chunk* being grounded, and the *remainder* values to be grounded as discussed in the previous sections. As already described these three buffers can be thought of as a single buffer *telno* which is broken into different blocks. Each *block* has a start point denoted by the boundaries $B_0...B_{M-1}$. A block is taken to stretch from one block boundary to the next block boundary or the end of the buffer contents if there is no next boundary. The primary thing to note is that block boundaries are recorded wherever a *chunk* starts in a new place in the *telno* buffer. Under condition (a) in section 2.8.3, *chunks* can be written and re-written over the same portion of the buffer without creating any new block boundaries. When a new block boundary is created, then the region between it and the previous block boundary becomes a *block.* Hence chunks are the same as blocks if the giver remains silent, confirms or continues at inter-chunk boundaries, but they can be very different if the speaker ever backs-up to make a correction or repetition.
The *finalRepair* algorithm (second version) described above uses the concept of Correction Units (CU's) which are used to repair the telephone number when it is found to be over-length.
Conceptually a CU represents a sequence of digits as input by the giver which lines up with the start of an sequence of digits offered as output. It has already been noted that, for the simple unchunked case, if an input is an explicit correction, the resultant repaired block becomes a CU which replaces the original one and this whole new CU is used as the output for the next confirmation. Block boundaries in such a case will always line up with the start of CU's. For CU's arising other than from inter-chunk inputs in chunked confirmations, this basic definition is all that is needed.

In the chunked confirmation case, there can be one correction unit starting at each block boundary, namely $CU_0$... $CU_{M-1}$. These correction units are represented as an integer number of tokens counting forward from the block boundary. However only some of the blocks have a correction unit (CU) associated with them. Those without are represented as $CU_Y = 0$. Correction units can overlap, and need not end at block boundaries.

By way of example in the diagram block 0 has a correction unit, **$CU_0$**, spanning to the end of the token buffer. **$CU_1$** and **$CU_2$** are not present (i.e. zero), denoting the fact that a continuing input from the giver has only happened at the start of the first block

In the following sections examples will be given. The notation used for these examples is defined as follows:

N=no.
C= correction acknowledgement: "sorry' (preceding echo of block).
S= silence
Y "yes" or synonym
* is not part of the dialogue - It indicates to the reader that the digit preceding it has been misrecognised.

Examples of dialogue turns are given, when not tabulated, in the form of the string recognised as received from the giver, a hyphen, then the string spoken by the system

### CU's and Non-Chunked Confirmation (cf. Figure II)

In the basic dialogue with no chunked confirmations as shown in Figure II, there is one CU's for every block, and CU's always span a single block exactly. The variable current_block can be considered to play the same role as chunk in the chunked confirmation. The rules for CU's in these circumstances are

A New CU's are created whenever an input is interpreted to be a pure continuation. This entire input will become a current_block to be played out. A block boundary is thus inserted at this point.

B When a repair is given by repeating only the end of the just-echoed"chunk", the CU is unchanged. An apology will be given to the giver and the current_block, set to the new value of this corrected CU, will be played out: e.g. in "123-124* N23-C123" the repaired CU is "123". Also after a repair and continuation in the same utterance, no new CU is created but the CU is extended to cover the entire input: An apology will be played out, and the current_block will be set to the value of this extended CU and played out. e.g.:"123-124* N123168-C123168" yields a CU "123168".

### CU's and Chunked Confirmation (cf. Figure IV)- Summary

In the case where chunked confirmation is used, the definition of CU's becomes more complex. Basically, when a digit string is received from the giver it is gradually broken into chunks for output one at a time as the chunked confirmation evolves. As described, separate block boundaries are marked in the buffer as the confirmation evolves. Initially the whole input string is a single CU since it was given by the giver in a single utterance. However, this CU can be modified and additional CU's can arise from inter-chunk inputs (cf. Figure IV).

Correction Units are intended to capture the regions of the telno buffer which have been interpreted in one way, but may actually have been a repair of a preceding blocks before them. Thus they can only start at points that co-incide with the start of input utterances. This is because any other interpretation will not have remainded ambiguous in the dialogue and hence will not be useful during final repair.

### reComputeCU's(k,CUstate)

As will be seen in the subsequent description, the CU's are directly associated with FI and FG when they are created. Sometimes however an input will extend an existing CU rather than create a new one so there is not a 1:1 correspondence between input and correction unit.

On creation, if it is a simple CU, then the start of the CU would start point would be FI and it would extend (FG-FI+1) digits in extent. However due to the CU rules, the CU start point will not be changed, but it could be extended to a later FG point if neccessary. Hence a CU's index number identifies its immutable start point, but its extent may be modified by a later input.

CU's are altered or new CU's generated by the function reComputeCU' s (k) in step 717. This function extends the two rules we have for the unchunked case above, and adds an additional rule. These three rules correspond to the CUstate's returned by the function updateBuffer() in step 716. The rules are all based on the value of k and the length of chunk as follows:

A. **(k=0)**. The input has been interpreted as a pure continuation from the end of chunk. This input becomes a becomes new correction unit (CU's). The initial part of , or all of the input will be echoed back to the giver as the next chunk.

Thus given that current 'chunk' starts at block boundary $B_X$ (=FO) and ends at index (FR-1), and FI=FR because k=0. then:

$$CU_{x+1}=FG-FI+1$$

This input may actually have been a correction rather than a continuation and hence its status as a correction unit.

B. **(k <= length(chunk))** . The input is interpreted to a partial or exact replacement or correction of the chunk, with a possible continuation.

This condition does not create a new CU, but it does extend the current CU to span the whole of the current input if it does not already do so.

Thus given that current CU is $CU_Y$ which starts at block boundary $B_Y$. Recall that the current CU is the last NON-ZERO correction unit and thus there may be block boundaries following the start of the current CU.

if ($CU_Y<FG-B_Y+1$) then { $CU_Y=FG-B_Y+1$ }

If it was a correction, the receiver will hear a 'sorry' followed by the corrected chunk. (2.8.3.a). If it was a repetition, the initial part of, or all of the continuation will be echoed back to the giver as the next block.

If the interpretation was correct then the correcting function of this input has already taken effect, so it will not require a CU to allow it to have a correcting function. If the chunk already had a possible correcting function there will already be a CU there, and the original CU will itself be corrected by this input. If this interpretation was wrong, then the next prompt will make it clear that an incorrect interpretation has been made and the giver has an opportunity to correct it.

C. **(k > length(chunk)).** The input is interpreted to completely replace the chunk and also inserts additional digits at the block boundary where before the chunk. Continuation may well be present also. This is a special case due to the fact that alignInput() only repairs the current chunk when the input has actually aligned further back into preceeding values in the buffer.

A new CU is created if there is not a pre-existing one at that boundary. If this CU does not span the whole input it is extended to do so.

Thus given that the current 'chunk' starts at block boundary $B_X$ (=FO) and ends at index (FR-1):

$$if\ (CU_X==0)\ \{\ CU_X=FG-B_X+1\ \}$$
$$else\ if\ (CU_X<FG-B_X+1)\ then\ \{\ CU_X=FG-B_X+1\ \}$$

The giver will hear "Sorry" followed by an echo of the whole of the current input. Hence it will be clear that this input has been treated as a correction of preceding digits.

As there has been an insertion at block boundary, this CU could is very likely to actually contain a measure of correction of a previous block. Repair of this mistake can occur at finalRepair().

**Final repair**

The finalRepair algorithm described earlier can be modified to use the concept of Correction Units (CU's) in order to repair the telephone number when it is found to be over-length.

In this case the numbered steps given previously are replaced by the following:

1. Apply the basic final repair operation - i.e. delete block n-1 if CU n differs from it by exactly one digit (through substitution, insertion or deletion).

2. Delete the last L(n) digits of block n-1 if these digits differ from CU n by exactly one digit substitution, where L (n) is the length of CU n. (This deals with end-of-block repetition following a substitution error, but it could go wrong in cases with insertion and deletion errors, especially in non-geographic numbers where the correct total length is not known.)

3. Delete blocks n-k to n-1 (where k >= 1) if their concatenation is an initial sub-string of CU n. (This deals with restarts in cases without a prior recognition error. The initial sub-string is allowed to be the whole of CU n: so the algorithm can cope with simple repetition of part or all of the number.)

4. Delete blocks n-k to n-1 if their concatenation differs from CU n by exactly one digit substitution. (This deals with a restart following a substitution error, or a late correction in which the blocks since the one with the error are repeated. It could be extended to allow the digits to differ by one insertion or deletion, to cope with restarts following insertion and deletion errors.)

5. Delete blocks n-k to n-1 if their concatenation differs from an initial sub-string of CU n by exactly one digit substitution. (This deals with correction and continuation in the same block, including the case with a restart or a late repair, following a substitution error.)

The finalRepair() algorithm implements the principle that the tokens following a correction unit boundary that can credibly be considered to be contiguous, may in fact be a repair for tokens which occur before that boundary. A second principle that is used in the finalRepair algorithm is that, based on behavioural observations, giver correcting inputs will tend to either start or end at a block boundary. In the current implementation the block boundaries are those imposed by the receiver, attempting to adopting giver start points as block boundaries wherever a continuation interpretation is made.

These principles could be implemented by different algorithms which differ in detail, but not intent, over the algorithm described above. For example the algorithm already adopts an approximate interpretation of the alignInput () algorithm, but with differences. It does look for possible insertion and deletion errors. It does not however currently exhaustively explore all alignments. Instead, for the reason stated above and for efficiency, it biases the search towards block boundary decisions. The algorithm could be straightforwardly extended to allow a full DP match during finalRepair.

As has been seen in the test(telno) function, it is also a possibility to define a grammar (for example a regular expression) to describe what a complete telephone number looks like. Then, the decision as to whether a particular repair option is successful or not may be made according to whether the resulting buffer contents match this grammar or not.

**Examples**

(The notation used here is as defined earlier)

**Example 1** (restart from earlier block - full repair of last chunk):

| Giver | Interpretation | System |
|---|---|---|
| 01234567890 S | A | thats_01234 568* |
| N01234567 S S | C | C01 234567 890 |

After this the blocks in telno are 01234 01234567 890 and the CU's are 01234012345, starting at the first block, and 01234567, starting at the second block. The first CU was created at the first utterance and its length is unchanged although its content has been changed; this looks anomalous, but shouldn't matter, especially in a case like this where it is at the start of the number. (The CU at the first block is never used since there is nothing before for it to correct.) The second CU was created by the correcting input after the recognition error; it will be used in final repair so that the first block gets deleted. The repair succeeds at stage 3.

**Example 2** (restart from earlier block outside the chunked sequence, with continuation - full repair of last chunk):

| Giver | Interpretation | System |
|---|---|---|
| 01234 | A | 01234 |
| 567890 | A | 54*7 |
| 01234567890 Y | C | C01234567890 |

The blocks after this are 01234 01234567890, and the CU's are the same. The repair succeeds at stage 3.

**Example 3** (continuation misinterpreted as repetition - case 2a, followed by correction misinterpreted as continuation):

| Giver | Interpretation | System |
|---|---|---|
| 01234123123 S | A | thats_01234 123 |
| 123 | B | 124* |
| 123 S | A | 123 |

This results in blocks 01234 123 124 123, and CU's 01234123124 (from original input, with last digit misrecognised) and 123 (from last input). Final repair succeeds, because the block 124 is not a CU and so it can't create a repair ambiguity by being a candidate to replace the preceding 123. The repair succeeds at stage 1.

**Example 4** (correction misinterpreted as continuation, followed by confirmation misinterpreted as continuation):

| Giver | Interpretation | System |
|---|---|---|
| 01234123123 S | A | thats_01234 125* |
| 123 | A | 123 |
| Y123 S | A | 123 |

This yields blocks 01234 125 123 123, with CU's 01234125123 (from the original input), 123 (from the interchunk input, overlapping with the first CU) and 123 (from the last input).
Stage 1 of final repair will delete the block 125 in favour of the CU 123 that follows it.

**Example 5**

| Giver | Interpretation | System |
|---|---|---|
| 01234567890 S | A | thats_01234 567 |
| S | | 890 |
| 01234567 | A | 01238* |

(continued)

| Giver | Interpretation | System |
|---|---|---|
| N 34567890 Y | B | C01234567890 |

After this the blocks are 01234 567 890 01234567890 and the CU's are 01234567890 (at the beginning) and 01234567890 (from the second input type A, extended by the third, type B).
Stage 3 of final repair will replace the whole of the first CU.

**Example 6.**

| Giver | Interpretation | System |
|---|---|---|
| 01234567890 S S | A | thats_01234 567 890 |
| 01234567890 | A | 01238* |
| N 34567890 Y | B | C01234567890 |

After this the blocks will be 01234 567 890 01234567890 and the CU's will be 01234567890 and 01234567890.
Stage 3 of final repair will replace the whole of the first CU with the second CU.

**Example 7**

| Giver | Interpretation | System |
|---|---|---|
| 01234567890 S S | A | thats_01234 567 88*0 |
| 01234567890 | A | 01233* |
| N01234 S S Y | B | C01234 567 890 |

This yields blocks 01234 567 880 01234 567 890, with CU's 01234567880 and 01234567890. Stage 4 of the final repair will replace the first CU with the second.

**Chapter V**

**Other possible dialogue variants**

Possible variations on the above dialogues include the following.

* In the first simple variant of the dialogue, it would be possible to interpret every input as a continuation (i.e. echo everything received back to the caller, possibly with a 'sorry' preceding all utterances starting with 'no'). These can become new blocks, and the finalRepair() algorithm used to decide the correct interpretation at the end. Block dervied from an utterance containing 'no' could be noted and the final repair could insist that they have a correcting function, or bias choice of alternative corrections towards those interpretations with these utterances having correction functions. This approach may be especially beneficial in circumstances where it is difficult to do the interpretation between inputs for reasons of speed or technical architecture.

*   If there is a missing STD code with a full body following a completion signal and the caller CLI is available, it might be best to guess the code from the caller's code. In the trial CLI was not available so we used the strategy of explicitly asking for the code instead.

*   On straight "no", the system could clear only the current_block, apologise and ask for a repeat of the block: either "sorry! could you repeat that" if after first block output or "sorry, can I have that bit again" if after subsequent block outputs. This would have the advantage of requiring less repetition by the giver, but the disadvantage of possible confusion as to what "that bit" refers to.

*   The repair algorithm could be modified, for the self-repair case ("<digits> no <digits>") or the correction-of-echo case ("no <digits>") or both. In particular, when there are fewer digits in the replacement block (after the "no") than in the block being corrected, the present algorithm replaces only the end of the original block. A simple alternative is to replace the whole of the original block; but this yields the wrong result - in a way that may not be obvious to the giver - where the giver is correcting an error in the last chunk of a block (containing two or more chunks) without repeating the earlier digits in the block. More sophisticated strategies could be devised, replacing the whole block or only the end of it according to the degree of similarity between the replaced and replacement digit strings or according to heuristics based on block length. The present algorithm has the advantages of simplicity and explicitness (it should be clear to the giver that the block echoed after the repair, which is always at least as long as the block echoed before it, is intended to replace the whole of that block); its disadvantages are that a correction of the early part of a block will be misinterpreted if followed by a pause and that it is very difficult for the giver to correct an overlength block at the end of a number (the only way to do this is to give a straight "no" or garbled input which causes the system to clear the buffer and start again).

    •   In the case where, on receiving a completion signal or silence, the first block in the buffer does not start with "0" but the last block does, the software could test whether a complete number can be obtained by moving the last block to the beginning and, if so, treat the accumulated input as a complete number. The dialogue could optionally offer the rearranged number for confirmation, as it already does in the case of a repaired number after entry of too many digits.
    •   "Thank you" could be added as an explicit completion signal immediately following the echo when the digits given so far constitute a complete number. This should work well, and would correspond to the most common pattern in human operator dialogues, when there had been no error and correction during the number transfer; but it could confuse the giver in the case where one of the blocks given was actually a replacement for the preceding block and the number was therefore not complete. The more subtle completion signal adopted in Figure II (just a change from continuing to ending intonation in the echo) seems less likely to cause such confusion. The "Thank you" message is given only after a completion signal or silence from the giver.
    •   The repair-from-end strategy of immediate repair is usually successful, but it fails in the minority of cases where the giver repeats only a non-final part of the previous block. The problem with non-final partial repetitions would require a similarity-based correction strategy, in which the digits after "no" would be taken as a correction for the part of the previous input that they most closely resembled.
    •   The repair-from-end rule will also fail in cases with insertion and deletion errors (artificially excluded from the trials to date, but occurring occasionally as wizard errors), since it assumes that the correcting digits must replace the same number of digits in the previously recognised input. Here again, similarity-based matching might be required.

**Chapter VI**

Figure IX is a modified flowchart which essentially integrates the functionality of the two flowcharts of Figures II and IV to give a generalised solution to the problem. It has two possible start-points.

The first - start(initial) - notes that is not essential that the original input that is now to be read back and confirmed by means of a spoken response should itself actually have been generated from a speech input. Thus the process shown in Figure IX could be applied to input from another source. One example of this, in the context of a telephone number dialogue might be where the system obtains a number (or part of a number such as the STD code) from a database, or perhaps assumes that the code will be the same as the user's own STD code, but needs to offer it for confirmation in case it has "guessed" wrongly." This can be done by using the start(initial) route and setting intitial to the assumed 'STD'. The giver can then confirm this, correct it, or continue to give the number in the same fashion described previously.

The second - start("") - starts with an empty buffer and asks an intial question to ilicit an answer. This represents the normal operation described to date.

Another difference in figure IX from previous embodiments, is that once the telephone number has been successfully repaired, it is again offered for confirmation using the same algorithm. This is directly equivalent to re-starting the algorithm at start(initial) and setting the 'initial' value to be the repaired telephone number. it can thus be seen that this invention can be used for the input of unkonwn information or for the confirmation of possibly uncertain information in the same framework.

Appendices

**Appendix A. Chunk decision and play-back algorithms**

The following pseudo code detects and removes and returns an UK STD code at the start of a block. NB STD code patterns can change fairly frequently in the UK due to strong regulatory involvement.

```
removeStdFromStart(remainder) {

        std=""

        if (remainder=~ "(^020) || (^023) || (^024) || (^028) || (^029)")      #3 digit STD's
{ std=removeFromStart(3,remainder); return std}

        else if (remainder=~"(^01[0-9]1) || (^011[0-9]) || (^0[3-9][0-9][0-9])")
{ std=removeFromStart(4,remainder); return std}          #4 digit STD's

        else if (remainder=~ "^0[1-9][0-9][0-9][0-9]")
{ std=removeFromStart(5,remainder); return std}          #5 digit STD's

        else return std;

}
```

The following pseudo code then uses this function to take a block of digits and identify the next chunk in a block to be read out.

```
removeChunkFromStart(remainder,isStd) {

        # Remove the next chunk from the remainder, set isStd flag if chunk is an Std code.

isStd=FALSE

        N=length(buffer)

        if (N==0) { return }

if (std=removeStdFromStart(remainder) ) { isStd=TRUE; return Std }

        if (1<=N<=4) { chunk=removeFromStart(N,remainder); return chunk }

        if (N==5) { chunk=removeFromStart(2,remainder); return chunk }

        if (6<=N<=7) { chunk=removeFromStart(3,remainder); return chunk }

if (N==8) { chunk=removeFromStart(4,remainder); return chunk }

if (N>=9) { chunk=removeFromStart(3,remainder); return chunk }

}
```

Alternatively when, deciding on chunk boundaries within a buffer, regular expressions may be used to match certain patterns in the buffer which are known to contain common boundaries when they are read-out. These regular expressions could also contain right-context for the boundaries – i.e. the regular expression may be split into two parts as below:

For example, the following two UK STD codes:

01159    Nottingham, Notts
0115     . Arnold, Notts

The regular expression containing:

std = (0115)([0-8]) || (01159) ....

allows these two to be distinguished. By using the part of the buffer which matched the first bracketed expression to decide the chunk boundary after an STD code, for example, right-context can be taken into account when deciding on digit chunk boundaries.

The following pseudo code describes how to use removeChunkFromStart to realise chunked number read-out of a input digit sequence (whole or part of a telephone number). The 'endIntonationOption' permits the giver to define whether the intonation of the very final chunk will be "ending" or "continuing". For example if the dialogue is sure that the end of the input block is the end of a UK telephone number it may choose to use ending intonation to signal this. Otherwise continuing intonation will encourage the giver to keep saying new chunks.

```
playBlock(block,endIntonationOption) {

    remainder=block;

    if (isEmpty(remainder)) { return; }   # recursive end point

    chunk=removeChunkFromStart(remainder,isStd)

    #Now Play it with ending intonation option if no digits after this, else play with
continuing intonation.

if (isStd) {pause=20} else {pause=10}

    if (isEmpty(remainder) { playChunk(chunk,endIntonationOption); }

    else {playChunk(chunk,"continuing"); playPause(pause) }


playBlock(remainder,endIntonationOption);

}
```

The following function plays a chunk of digits out imposing an appropriate intonation on the chunk to make it sound natural. If endInton="ending" then the intonation of the final digit of the chunk will signal that there are no more chunks to follow (e.g. signal that the dialogue believes that the last chunk in the telephone number has been received). If endInto="continuing" then the final digit will have intonation which indicates that further digits are to follow in a subsequent chunk.

The chunk is realised as a concatenation of pre-recorded files spoken by a professional speaker in context. These files were recorded by asking the speaker, for each digit oh-9 to say digit chunks of the same repeated digit with ending or continuing intonation. The artist is instructed to avoid co-articulation between the digits. A recording is made for each digit for each chunk size (from 1digit chunks through 4 digit chunks) for each type of ending intonation - hence 80 chunks are recorded. These chunks are then edited into separate digits and a naming scheme used to identify them. Any arbitrary chunk of size 1-4 may then be synthesised with high quality from these digits with either continuing or ending intonation at their end point.

An couple of examples are given below:

| continuing_4_2_3.wav | Play the digit "2" selected from the third digit place of a four digit chunk that was recorded with continuing intonation |
| --- | --- |
| ending_3_7_1 | Play the digit "7" selected from the first place of a three digit chunk that was recorded with ending intonation. |

The pseudo code to realise chunks using this scheme is given below:

```
playChunk(chunk,endInton) {
        L=length(chunk);
for (i=1; i<=L; i++) {       #NB. index starts at one.
                filename=endInton+"_"+L+"_"+chunk[i]+"_"+i;
                play filename;
        }
}
```

## Appendix B. FinalRepair( ) Algorithm

### Operators

LEN(string) returns an integer, being the length of string

SUBST(string1, string2) returns a 1 if the two strings are identical except for one digit

SINS(string1, string2) returns a 1 if string2 is identical to string 1 except that the latter has a digit missing.

LEFT, RIGHT, CONCATENATE are obvious.

### Problem

Wanted length = W

We have a number consisting of N blocks. Each block is represented by an index - $BI(n)$ (n=0 ...N-1) which indicates the start location in the telno buffer at which block n starts.

The number of digits in block $B(n)$ is $BL(n)$. Therefore Block $B(n)$ is defined to be the region in the telno buffer as follows:

$$B(n) = telno[\ BI(n) .. BI(n)+BL(n)-1\ ]$$

The total length T of the number is $SIGMA(BL(n))$ for n= 0...N-1

The number exceeds the wanted length by E: i.e. $T=W+E$

A Confirmation Unit may consist of a single block or span all or part of several blocks

Confirmation Unit $C(n)$ is the unit beginning with block n and is $L(n)$ tokens in length. $C(n)$. The definition of $CU(n)$ is therefore:

$$C(n) = telno[\ BI(n) .. BI(n)+L(n)-1\ ]$$

If a particular block n does not have a Confirmation Unit associated with it then $L(n)=0$ signifying that there is no Confirmation unit corresponding to block n.

**Case 1:** Confirmation unit n differs from block n-1 by one digit, whether by substitution, insertion or deletion. Action = delete block n-1

| Example | block n-1 | CU n |
|---|---|---|
| substitution | 12345 | 12445 |
| insertion | 12345 | 123475 |
| deletion | 12345 | 1345 |

```
Code
COUNT=0
FOR n =  1 TO N-1
        IF L(n)=0 GOTO notcu
        IF (SUBST(C(n),B(n-1))=1 OR SINS((C(n),B(n-1))=1 OR SINS((B(n-1), C(n)))
= 1 THEN
                COUNT = COUNT+1
                nn=n
        END IF
notcu:
NEXT N
IF COUNT = 1 THEN
        DELETE B(nn-1)
        RETURN SUCCESS
END IF
RETURN FAIL
```

**Case 2:** Confirmation unit n is the same as the last L(n) digits of block n-1, with one substitution. Action: Replace last L(n) digits of block n-1 with CU n and delete CU n

| Example | block n-1 | CU n |
|---|---|---|
| (if E=5) | 12345678 | 45668 |

```
Code:
COUNT=0
FOR n =  1 TO N-1
        IF L(n)=0 GOTO notcu
        IF (SUBST(C(n),RIGHT(B(n-1),L(n))=1) THEN
                COUNT = COUNT+1
                nn=n
        END IF
notcu:
NEXT N
IF COUNT = 1 THEN
        B(nn-1) = CONCATENATE ( LEFT(B(nn-1),(BL(nn-1)-L(nn))) , C(n) )
        DELETE C(n)
        RETURN SUCCESS
END IF
RETURN FAIL
```

**Case 3:** Concatenation of blocks n-k to n-1 (k>=1) is the same as the first E digits of CU n (where E<=L(n)). Action: delete blocks n-k to n-1.

| Example | block n-2 | block n-1 | CU n |
|---|---|---|---|
| (if E = 6, k=1) | 123 | 456 | 123456**789** |

**Code**
```
COUNT=0
FOR n=1 TO N-1
        IF L(n)=0 GOTO notcu
FOR k = 1 to n-1
                FOR E=1 TO L(n)
                        IF CONCATENATE(B(n-k) ... B(n-1))=LEFT (C(n),E) THEN
                                COUNT = COUNT+1
                                nn=n
                                kk=k
                                EE=E
                        END IF
                NEXT E
        notcu:
        NEXT k
NEXT n
IF COUNT = 1 THEN
        FOR k = (nn-kk) to (nn-1)
        DELETE B(k)
        RETURN SUCCESS
END IF
RETURN FAIL
```

**Case 4:** Concatenation of blocks n-k to n-1 (k<=1) is the same as CU n with one substitution.
Action: delete blocks n-k to n-1

| Example | block n-2 | block n-1 | CU n |
|---|---|---|---|
| (if E = 6, k=1) | 123 | 456 | 122456 |

**Code**
```
COUNT=0
FOR n=1 TO N-1
        IF L(n)=0 GOTO notcu
        FOR k = 1 to n-1
                IF SUBST( CONCATENATE(B(n-k) ... B(n-1)) , C(n) )=1 THEN
                        COUNT = COUNT+1
                        nn=n
                        kk=k
                END IF
        notcu:
        NEXT k
NEXT n
IF COUNT = 1 THEN
        FOR k = (nn-kk) to (nn-1)
        DELETE B(k)
```

```
          RETURN SUCCESS
END IF
RETURN FAIL
```

**Case 5**: Concatenation of blocks n-k to n-1 (k<=1) is the same as the first E digits of CU n with one substitution. Action: delete blocks n-k to n-1

| Example | block n-2 | block n-1 | CU n |
|---|---|---|---|
| (if E = 6, k=1) | 123 | 456 | 113456789 |

**Code**
```
COUNT=0
FOR n=1 TO N-1
        IF L(n)=0 GOTO notcu
FOR k = 1 to n-1
                FOR E=1 TO L(n)
                        IF SUBS( CONCATENATE(B(n-k) ... B(n-1)) , LEFT
(C(n),E))=1 THEN
                                COUNT = COUNT+1
                                nn=n
                                kk=k
                                EE=E
                        END IF
                NEXT E
        notcu:
        NEXT k
NEXT n
IF COUNT = 1 THEN
        FOR k = (nn-kk) to (nn-1)
        DELETE B(k)
        RETURN SUCCESS
END IF
RETURN FAIL
```

**Claims**

1. An automated dialogue apparatus comprising:

   • a buffer for storing coded representations;

   • speech generation means operable to generate a speech signal from the coded representation for confirmation by a user;

   • speech recognition means operable to recognise speech received from the user and generate a coded representation of thereof;

- means operable upon recognition of a response from the user to compare the coded representation thereof with the contents of the buffer to determine, for each of a plurality of different alignments between the coded response and the buffer contents, a respective similarity measure, wherein at least some of said comparisons involve comparing only a leading portion of the coded response with a part of the buffer contents already uttered by the speech generation means; and

- means for replacing at least part of the buffer contents with at least part of said recognised response, in accordance with the alignment having the similarity measure indicative of the greatest similarity.

**2.** An automated dialogue apparatus according to claim 1, further comprising means operable to divide the buffer contents into at least two portions, to supply an earlier portion to the speech generation means and to await a response from the user before supplying a later portion to the speech generation means, wherein at least some of said comparisons involve comparing the coded response with a concatenation of a part of the buffer contents already uttered by the speech generation means and the portion which, in the buffer, immediately follows it.

**3.** An apparatus according to claim 2 in which the replacing means is operable to record status information defining the buffer contents as confirmed, offered for confimation but not confirmed, and yet to be offered for confirmation.

**4.** An apparatus according to claim 3 in which the status information is recorded by means of pointers indicating boundary positions within the buffer between representations having respective different status.

**5.** An apparatus according to claim 3 or 4 in which the similarity measure is a function of (a) differences between the coded representation of the user's response and the contents of the buffer and (b) the status of those contents.

**6.** An apparatus according to any one of claims 1 to 5 in which a portion of the coded representation of the user's response that in any particular alignment precedes the buffer contents is deemed to be different.

**7.** An apparatus according to one of claims 1 to 6 in which a portion of the coded representation of the user's response that in any particular alignment follows the buffer contents does not contribute to the similarity measure.

**8.** An apparatus according to any one of claims 1 to 7 in which the replacing means is operable, in the event that the alignment having the similarity measure indicative of the greatest similarity is an alignment corresponding to a pure continuation of the part of the buffer contents already uttered by the speech generation means, to enter the coded response into the buffer at such position and to mark the position within the buffer at which such entry began; and further comprising means operable to examine the buffer contents and to compare a part of the buffer contents immediately following a marked position with a part immediately preceding the same marked position to determine whether or not said immediately following part can be interpreted as a correction or partial correction of said immediately preceding part.

**9.** An apparatus according to claim 8 in which the replacing means is operable, in the event that the alignment having the similarity measure indicative of the greatest similarity is an alignment in which a non-leading portion of the coded response corresponds to a correction of the part of that part of the buffer contents most recently uttered by the speech generation means, to insert the leading portion of the coded response into the buffer before the most recently uttered part, and to mark the position within the buffer at which such insertion began.

**10.** An automated dialogue apparatus according to any one of claims 1 to 9, including means operable to recognise a spoken response containing an indication of non-confirmation and in response thereto to suppress selection of an alignment corresponing to a pure continuation of the part of the buffer contents already uttered by the speech generation means.

**11.** A method of speech recognition comprising

(a) receiving a coded representation;
(b) performing at least once the steps of

(b1) recognising speech from a speaker to generate a coded representation thereof;
(b2) updating the previous coded representation by concatenation of at least part thereof with this recognised coded representation;

(b3) marking the position within the updated representation at which said concatenation occurred; and

(c) comparing a part of the updated representation immediately following the marked position with a part immediately preceding the same marked position to determine whether or not said immediately following part can be interpreted as a correction or partial correction of said immediately preceding part.

**12.** A method according to claim 11 including performing the correction or partial correction.

**13.** A method according to claim 11 including performing the comparison in respect of a plurality of marked positions and performing the correction or partial correction in respect of that one of the marked positions for which a set criterion is satisfied.

**14.** A method according to claim 11 including performing the comparison in respect of a plurality of marked positions and performing the correction or partial correction in respect of a plurality of marked positions for which a set criterion is satisfied

**15.** A method according to claim 13 or 14 in which the set criterion is that the corrected updated representation corresponds to an expected length.

**16.** A method according to claim 13 or 14 in which the set criterion is that the corrected updated representation matches a predetermined pattern definition.

**17.** A method according to any one of claims 11 to 16 including, in step (b), examining the recognised coded representation to determine whether it is to be immediately interpreted as a correction or partial correction, and performing such correction or partial correction, including continuation, if any;
wherein the steps of concatenation and marking are performed only in the event that the recognised coded representation is determined as not to be immediately interpreted as a correction or partial correction.

**18.** A method according to any one of claims 11 to 17 including generating, for confirmation, a speech signal from only part of the current coded representation, wherein said concatenation occurs at the end of that part.

**19.** A method according to any one of claims 11 to 18 in which the coded representation of step (a) is also generated by recognition of speech from the speaker.

**20.** A method of speech recognition comprising

(a) recognising speech received from a speaker and generating a coded representation of each discrete utterance thereof; and storing a plurality of representations of discrete utterances in sequence in a buffer, including markers indicative of divisions between units corresponding to the discrete utterances;

(b) performing a comparison process having a plurality of comparison steps, wherein each comparison step comprises comparing a first comparison sequence (each of which comprises a unit or leading portion thereof) with a second comparison sequence which, in the stored sequence, immediately precedes the first comparison sequence, so as to determine whether the first and second comparison sequences meet a predetermined criterion of similarity;

(c) in the event that the comparison process identifies only one instance of first and second comparison sequences meeting the criterion, deleting the second comparison sequence of that instance from the stored sequence.

**21.** A method of speech recognition comprising

(a) recognising speech received from a speaker and generating a coded representation of each discrete utterance thereof; and storing a plurality of representations of discrete utterances in sequence in a buffer, including markers indicative of divisions between units corresponding to the discrete utterances;
in response to a parameter which defines an expected length for the stored sequence, the step of comparing the actual length of the stored sequence with the parameter and in the event that the actual length exceeds the parameter:

(b) performing a comparison process having a plurality of comparison steps, wherein each comparison step comprises comparing a first comparison sequence (each of which comprises a unit or leading portion thereof) with a second comparison sequence which, in the stored sequence, immediately precedes the first comparison sequence, so as to determine whether the first and second comparison sequences meet a predetermined criterion of similarity;

(c) in the event that the comparison process identifies only one instance where both (i) the length of the second comparison sequence is equal to the difference between the actual and expected length and (ii) the first and second comparison sequences meet the criterion, deleting the second comparison sequence of that instance from the stored sequence.

22. A method according to claim 20 or 21 comprising, in the case that no deletion is performed at step (c), performing a further such comparison process having a different predetermined criterion and/or a different manner of selection of the first and second comparison sequences.

23. A method of speech recognition comprising

(a) storing a coded representation;
(b) selecting a portion of the stored coded representation;
(c) supplying the selected portion to speech generation means operable to generate a speech signal therefrom for confirmation by a user;
(d) recognising a spoken response from the user to generate a coded representation thereof; and
(e) updating the stored coded representation on the basis of the recognised response;

wherein said updating includes updating at least one part of the stored coded representation other than the selected portion.

24. A method according to claim 23 including the step of(f) repeating steps (b) to (d) at least once.

25. A method according to claim 23 or 24 including generating for each selected portion a first marker indicative of the position thereof within the stored coded representation.

26. A method according to any one of claims 23 to 25 in which said updating includes, according to the content of the recognised coded representation, one or more of:

(i) correcting the selected portion or part thereof;
(ii) entering at least part of the recognised coded representation into the stored coded representation at a position immediately following the selected portion.

27. A method according to claim 26 in which said updating includes, according to the content of the recognised coded representation,

(iii) inserting a leading part of the recognised coded representation into the stored coded representation at a position before the selected portion.

28. A method according to claim 26 or 27 including generating for each entered part and any inserted part a second marker indicative of the position thereof within the stored coded representation.

29. A method according to claim 28 comprising the subsequent step of comparing, for the or each second marker, a part of the updated representation immediately following a position marked by that second marker with a part immediately preceding the same marked position to determine whether said immediately following part can be interpreted as a correction or partial correction of said immediately preceding part.

30. A method according to claim 29 when dependent on claim 25 in which said subsequent step of comparing compares a part of the updated representation immediately following a position marked by a second marker preferentially or exclusively with one or more immediately preceding parts marked by a first marker.

31. An automated dialogue apparatus comprising

speech generation means operable to generate a speech signal from a coded representation for confirmation by a user, **characterised by** means operable in dependence on the length of the coded representation to divide the coded representation into at least two portions, to supply a first portion to the speech generation means and to await a response from the user before supplying any further portion to the speech generation means.

**32.** An apparatus according to claim 31 including means for recognising predetermined patterns in the coded representation and wherein upon such recognition one of the portions is determined by reference to a recognised pattern.

**33.** An automated dialogue apparatus comprising:

- speech generation means operable to generate a speech signal from a coded representation for confirmation by a user; and

- means operable to divide the coded representation into at least two portions, to supply a first portion to the speech generation means and to await a response from the user before supplying any further portion to the speech generation means;

**characterised by** means for recognising predetermined patterns in the coded representation and wherein upon such recognition one of the portions is determined by reference to a recognised pattern.

**34.** An apparatus according to claim 32 or 33 in which the predetermined patterns are predetermined digit sequences occurring at the commencement of the representation.

**35.** An apparatus according to claim 34 for recognising telephone numbers, in which the coded representation is a representation of numeric digits.

**36.** An apparatus according to claim 34 or 35 in which the remainder of the coded representation is divided into portions such that each such portion shall not exceed a predetermined length.

**37.** An apparatus according to any one of claims 31 to 36 including speech recognition means operable to recognise speech received from the user and generate the coded representation therefrom.

**38.** An automated dialogue apparatus comprising:

- speech recognition means operable to recognise speech received from a speaker and generate a coded representation thereof;

- timeout means operable to determine in accordance with a silence duration parameter when an utterance being recognised is deemed to have ended;

**characterised by** means operable, during an utterance, in dependence on the contents of the utterance to date, to vary the timeout parameter for the continuation of that utterance.

**39.** An automated dialogue apparatus according to claim 38 in which said variation is conditional upon the inital part of the utterance matching a predetermined pattern

**40.** An automated dialogue apparatus according to claim 38 in which said variation is conditional upon recognition in the utterance of input indicative of negative confirmation to increase the timeout parameter for the remainder of that utterance.

**41.** An automated dialogue apparatus comprising:

- speech recognition means operable to recognise speech received from a speaker and generate a coded representation thereof;

- timeout means operable to determine in accordance with a silence duration parameter when an utterance being recognised is deemed to have ended;

**characterised by** means operable in dependence on a dialogue state to vary the timeout parameter.

1 → **SPEECH RECOGNISER** 2 → **PARSER** 3 → **INPUT BUFFER** 4

TIMEOUT
C ONTROL

STATE

5 **DIALOGUE PROCESSOR**

**TELNO** 10

**TELNO** 8 → 9

**SPEECH SYNTHESISER** 6

10

FIGURE I

Figure II

KEY:

| | | |
|---|---|---|
| D = [0-9] | A = abort | [ ] = optional |
| P = pardon | ? = uncertain digit | * = 0 or more |
| S = silence | . = any symbol | + = 1 or more |
| Y = yes | ^ = not | |
| N = no | ‖ = or | |

start

get(input_block)

**(a)**
(D‖?)* ? (D‖?)*
unclear digits

play
*"sorry?"*

**(b)**
(.)* ? (.)* (^D?) (.)* ‖
(.)* (^D?) (.)* ? (.)*
‖ (.)+ Y (.)*
‖ (.)* (^N) (.)* N
input containing
unclear digit and non-
digit content, or ill-
formed confirmation
or self-repair

clear(telno)

play
*"sorry! I missed
that, can I have
the code and
number again
please?"*

**(c)**
(.)* P (.)*
"pardon" or
synonym

play
<current_

**(d)**
[Y] (N)+
straight
"no"

clear(telno)

play
*"sorry! can I
have the code
and number
again
please?"*

**(e)**
[Y] N (D)+ ‖
[Y] N (D)+ N (D)+
contradiction and
correction with
optional self-repair

localRepair
(input_block)

immediateRepair
(current_block
,input_block)

play
*"sorry!"*
<current_block>

**(f)**
[Y] (D)+ ‖
[Y] (D)+ N (D)+
optional
confirmation plus
digit string, possibly
self-repaired

confirm
(current_block)

localRepair
(input_block)

set_current_block
( input_block)

play
<current_block>

**(g)**
Y ‖ S
explicit or implicit confirmation

confirm(current_block)

test(telno)

Too few
digits
given

play
*"could you
give me the
rest of the
number?"*

complete
body, no
STD

play
*"sorry,
what code
is that?"*

ok
(complete STD
and body)

play
*"thank
you!"*

ok

complete number
missing one digit

too many digits

finalRepair
(telno)

test(telno)

ok                    !ok

play
*"so that's"*
<telno>

Y ‖ S        N

fail

**(h)**
(.)* A (.)*
abort

Figure III. Simple telno buffer with block boundaries.

Figure V. Telno buffer extended for chunked confirmation and correction units.

## Figure IV

**Figure VI**

```
                        ┌─────────────────┐
                        │  isStd = FALSE  │
                        └─────────────────┘
                                 │
                        ┌─────────────────┐
                        │ N length(remainder) │
                        └─────────────────┘
                                 │
                          ⟨ N = 0 ? ⟩ ──YES──────────────────────►
                                 │ NO
        ⟨ left(remainder,3) = 020  123  028  029 ? ⟩ ──YES──► │ S = 3 │
                                 │ NO
        ⟨ left(remainder,4) = 01#1  011#  0!## ? ⟩ ──YES──► │ S = 4 │
                                 │ NO
        ⟨ left(remainder,5) = 0#### ? ⟩ ──YES──► │ S = 5 │
                                 │ NO                         │
     │ S = N │ ──YES── ⟨ N < 5 ? ⟩              ┌──────────────┐
                                 │ NO          │ isStd = TRUE │
     │ S = 2 │ ──YES── ⟨ N = 5 ? ⟩             └──────────────┘
                                 │ NO
     │ S = 4 │ ──YES── ⟨ N = 8 ? ⟩
                                 │ NO
                           │ S = 3 │
                                 │
              ┌──────────────────────────────────────┐
              │ chunk = left(remainder,S)             │
              │ remainder = right(remainder,S-N)      │
              └──────────────────────────────────────┘
                                 │
```

Figure
VII

## Figure VIII

(a) Chunk has been corrected, with optional continuation

(b) Chunk unchanged, with 1-5 digit continuation

(c) Chunk unchanged.  No continuation or 6+ digit continuation

## Figure IX

**KEY:**

D = [0-9]  ? = uncertain digit  [ ] = optional
P = pardon  . = any symbol  * = 0 or more
S = silence  ^ = not  + = 1 or more
Y = yes  ‖ = or
N = no

start (initial)

set_remainder(initial)

chunk = removeChunk FromStart(remainder)
addBoundary(chunk)

play *("that's")* <chunk>

get(input)

start ("")

output:
*can I have the code and number please?*

(.)* P (.)*
"pardon" or
synonym

[Y] N (D)+ ‖
[Y] N (D)+ N (D)+
contradiction and
correction with
optional self-repair

[(.)* Y] (D)+ ‖
[(.)* Y] (D)+ N (D)+
optional confirmation
plus digit string,
possibly self-repaired

(.)* Y ‖ S
explicit or
implicit
confirmatio

(.)* ? (.)* ‖
(.)+ Y (.)* N (.)* ‖
(.)* N (.)* Y (.)* ‖
(.)* (^N) (.)* N
unclear or ill-formed
input

[Y] (N)+
straight
"no"

**(a)**
(D‖?)* ? (D‖?)*
unclear digits

localRepair(input)

k= alignInput(chunk,
played, remainder, input)
cuState=updateBuffer(k)
reComputeCU's(k,cuState)

output:
*sorry! I missed that, can I
have the code and
number again please?*

output:
*sorry! can I have
the code and
number again
please?*

play
*"pardon?"*

clear(telno)

chunk changed or
'N' at start?  — no

(a) yes

set_chunk(C1+I1+I2)
set_remainder(R2)

play *"sorry!"*

confirm(chunk)

0<length(R1)<6?

(b) yes

set_chunk(I2)
set_remainder=(R2)
addBoundary(chunk)

(c) no

set_remainder
(I2+R2)

confirm(chunk)

remainder=="" — no

yes

test(telno)

too many digits

finalRepair (telno)

test(telno) — !ok

ok

play *"so that's…"*

set_remainder(telno)

complete number
missing one digit

end-fail

ok
complete STD
and body)

play
*"thank you!"*

end-ok

Too few
digits
given

play
*"could you give me
the rest of the
number?"*

complete
body, no
STD

play
*"sorry, what
code is that?"*

43

**European Patent Office**

**EUROPEAN SEARCH REPORT**

Application Number

EP 02 25 4354

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | US 6 078 887 A (OCKEL JOERG ET AL) 20 June 2000 (2000-06-20) * abstract * * column 5, line 4 - column 6, line 67 * | 23,31,33 | H04M3/493 G10L15/22 |
| A | idem | 1,11,20, 21 | |
| A | EP 0 582 340 A (PHILIPS PATENTVERWALTUNG ;PHILIPS ELECTRONICS NV (NL)) 9 February 1994 (1994-02-09) * abstract * | 1,11,20, 21,23, 31,33 | |
| A | KIKUI G ET AL: "SIMILARITY-BASED IDENTIFICATION OF REPAIRS IN JAPANESE SPOKEN LANGUAGE" ICSLP 94: 1994 INTERNATIONAL CONFERENCE ON SPOKEN LANGUAGE PROCESSING. YOKOHAMA, JAPAN, SEPT. 18 - 22, 1994, INTERNATIONAL CONFERENCE ON SPOKEN LANGUAGE PROCESSING. (ICSLP), YOKOHAMA: ASJ, JP, vol. 2, 18 September 1994 (1994-09-18), pages 915-918, XP000855399 * paragraph [0004] * | 1,11,20, 21,23, 31,33 | |

TECHNICAL FIELDS SEARCHED (Int.Cl.7)

H04M
G10L

~~The present search report has been drawn up for all claims~~

| Place of search | Date of completion of the search | Examiner |
|---|---|---|
| THE HAGUE | 12 November 2002 | Krembel, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | European Patent | Application Number |
|---|---|---|
| | Office | EP 02 25 4354 |

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-37

**European Patent Office**

## LACK OF UNITY OF INVENTION
### SHEET B

Application Number

EP 02 25 4354

The Search Division considers that the present European patent application does not comply with the requirements of unity of invention and relates to several inventions or groups of inventions, namely:

1. Claims: 1-37

   Spoken digit recognition repair strategy

2. Claims: 38-41

   State dependent timeout in spoken dialogue

## ANNEX TO THE EUROPEAN SEARCH REPORT
## ON EUROPEAN PATENT APPLICATION NO.

EP 02 25 4354

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2002

| Patent document cited in search report | | Publication date | Patent family member(s) | | Publication date |
|---|---|---|---|---|---|
| US 6078887 | A | 20-06-2000 | DE | 19709990 A1 | 24-09-1998 |
| | | | EP | 0865031 A2 | 16-09-1998 |
| | | | JP | 10254489 A | 25-09-1998 |
| EP 0582340 | A | 09-02-1994 | DE | 4225475 A1 | 03-02-1994 |
| | | | EP | 0582340 A1 | 09-02-1994 |
| | | | JP | 6252997 A | 09-09-1994 |

For more details about this annex : see Official Journal of the European Patent Office, No. 12/82